# EUROPÄISCHE PATENTSCHRIFT

(11) **EP 2 605 853 B1**
(45) Veröffentlichungstag und Bekanntmachung des Hinweises auf die Patenterteilung: **19.04.2017**
(21) Anmeldenummer: 11741582.8
(22) Anmeldetag: 11.08.2011
(51) Int. Cl.: B01F 17/00, C08F 2/44

(54) **VERFAHREN ZUR VERBESSERUNG DER LAGERSTABILITÄT VON WÄSSRIGEN KOMPOSITPARTIKEL-DISPERSIONEN**
PROCESS FOR IMPROVING THE STORAGE STABILITY OF AQUEOUS COMPOSITE PARTICLE DISPERSIONS
PROCÉDÉ POUR AMÉLIORER LA STABILITÉ AU STOCKAGE DE DISPERSIONS AQUEUSES DE PARTICULES COMPOSITES

(30) Priorität: 16.08.2010 EP 10172865
(43) Veröffentlichungstag der Anmeldung: 26.06.2013
(73) Patentinhaber: BASF SE, 67056 Ludwigshafen am Rhein (DE)
(72) Erfinder: LOHMEIJER, Bas, 68199 Mannheim (DE); JAHNS, Ekkehard, 69469 Weinheim (DE); WIESE, Harm, 69514 Laudenbach (DE)
(74) Vertreter: BASF IP Association
(86) Internationale Anmeldenummer: PCT/EP2011/063822
(87) Internationale Veröffentlichungsnummer: WO 2012/022667

(56) Entgegenhaltungen:
- WO-A1-2006/072464
- WO-A1-2008/135422
- WO-A1-2009/053317
- WO-A1-2009/130238
- WO-A1-2010/118961
- WO-A1-2010/139679
- US-A1- 2002 086 908

## Beschreibung

Gegenstand der vorliegenden Erfindung ist ein Verfahren zur Verbesserung der Lagerstabilität einer wässrigen Dispersion von Partikeln, welche aus Polymerisat und feinteiligem anorganischem Feststoff aufgebaut sind (Kompositpartikel), welches dadurch gekennzeichnet ist, dass dem wässrigen Dispergiermedium während oder nach der Herstellung der im wässrigen Medium dispergierten Kompositpartikel (Kompositpartikel-Dispersion) eine organische Silanverbindung I, der allgemeinen Formel 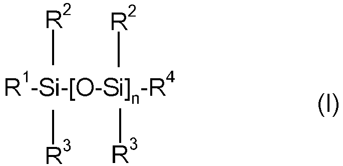 mit
- R¹ bis R³:: - C₁-C₁₀-Alkoxy,
- unsubstituiertes oder substituiertes C₁-C₃₀-Alkyl,
- unsubstituiertes oder substituiertes C₅-C₁₅-Cycloalkyl,
- unsubstituiertes oder substituiertes C₆-C₁₀-Aryl,
- unsubstituiertes oder substituiertes C₇-C₁₂-Aralkyl,
- R⁴:: 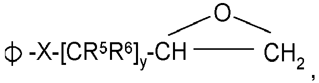 Φ:
- unsubstituiertes oder substituiertes C₁-C₃₀-Alkylen,
- unsubstituiertes oder substituiertes C₅-C₁₅-Cycloalkylen,
- unsubstituiertes oder substituiertes C₆-C₁₀-Arylen,
- unsubstituiertes oder substituiertes C₇-C₁₂-Aralkylen,

X: Sauerstoff, NR⁷ oder CR⁸R⁹
R⁵ bis R⁹: Wasserstoff, C₁-C₄-Alkyl,
- n:: ganze Zahl von 0 bis 5,
y: ganze Zahl von 0 bis 5,
wobei wenigstens einer der Reste R¹ bis R³ für C₁-C₁₀-Alkoxy steht,
zugesetzt wird.

Gegenstand der vorliegenden Erfindung sind ebenfalls wässrige Kompositpartikel-Dispersionen, welche nach dem erfindungsgemäßen Verfahren erhalten werden sowie wässrige Formulierungen, welche solche wässrigen Kompositpartikel-Dispersionen enthalten.

Wässrige Dispersionen von Kompositpartikeln (Kompositpartikel-Dispersionen) sind allgemein bekannt. Es handelt sich um fluide Systeme, die als disperse Phase in wässrigem Dispergiermedium aus mehreren ineinander verschlungenen Polymerisatketten bestehenden Polymerisatknäuel, die sogenannte Polymermatrix und feinteiligem anorganischen Feststoff aufgebaute Partikel in disperser Verteilung befindlich enthalten. Der Durchmesser der Kompositpartikel liegt häufig im Bereich von 10 nm bis 5000 nm.

Kompositpartikel und Verfahren zu ihrer Herstellung in Form von wässrigen Kompositpartikel-Dispersionen sowie deren Verwendung sind dem Fachmann bekannt und beispielsweise in den Schriften US-A 3,544,500, US-A 4,421,660, US-A 4,608,401, US-A 4,981,882, EP-A 104 498, EP-A 505 230, EP-A 572 128, GB-A 2 227 739, WO 0118081, WO 0129106, WO 03000760 sowie in Long et al., Tianjin Daxue Xuebao 1991, 4, Seiten 10 bis 15, Bourgeat-Lami et al.,Die Angewandte Makromolekulare Chemie 1996, 242, Seiten 105 bis 122, Paulke et al., Synthesis Studies of Paramagnetic Polystyrene Latex Particles in Scientific and Clinical Applications of Magnetic Carriers, Seiten 69 bis 76, Plenum Press, New York, 1997, Armes et al., Advanced Materials 1999, 11, Nr. 5, Seiten 408 bis 410 offenbart.

Nachteilig an den wässrigen Kompositpartikel-Dispersionen oder diese enthaltenden wässrigen Formulierungen ist, dass sie bei längerer Lagerung, insbesondere bei Temperaturen ≥ 40°C, einen Viskositätsanstieg bis hin zu einer Gelierung aufweisen können. Dadurch kann die Verarbeitung der wässrigen Kompositpartikel-Dispersionen oder diese enthaltenden wässrigen Formulierungen erschwert werden. Im Extremfall können die wässrigen Kompositpartikel-Dispersionen oder diese enthaltenden wässrigen Formulierungen für die Verarbeitung sogar unbrauchbar werden.

Für die Stabilisierung wässriger Kompositpartikel-Dispersionen ist lediglich von folgendem Stand der Technik auszugehen.

So offenbart die WO 05083015, wässrige Kompositpartikel-Dispersionen durch Zusatz von hydroxygruppenhaltigen Alkylaminoverbindungen zu stabilisieren.

Gemäß der WO 2009/130238 A1 wird offenbart, die Lagerstabilität wässriger Kompositpartikel-Dispersionen durch Zusatz einer zwitterionischen Verbindung zu verbessern.

In der nicht vorveröffentlichten Patentanmeldung PCT/EP2010/057608, (WO 2010/139679 A1) basierend auf der europäischen Prioritätsanmeldung mit der Anmeldungsnummer 09161827.2 wird vorgeschlagen, die Lagerstabilität wässriger Kompositpartikel-Dispersionen durch Zusatz spezifischer, mittels Alkylenoxygruppen hydrophil modifizierter Silanverbindungen zu verbessern.

Weitere wässerige Kompositpartikel-Dispersionen sind aus WO 2008/135422, WO 2006/072464 und WO 2009/053317 bekannt.

Aufgabe der vorliegenden Erfindung war es, ein alternatives bzw. effizienteres Verfahren zur Verbesserung der Lagerstabilität von wässrigen Kompositpartikel-Dispersionen und diese enthaltenden wässrigen Formulierungen bereitzustellen.

Demgemäss wurden die eingangs definierten Verfahren gefunden.

Im Rahmen dieser Schrift soll dabei "während der Herstellung der wässrigen Kompositpartikel-Dispersion" die Zugabe der Silanverbindung I zu einem beliebigen Zeitpunkt während der Polymerisationsreaktion und "nach der Herstellung der wässrigen Kompositpartikel-Dispersion" die Zugabe der Silanverbindung I zu einem beliebigem Zeitpunkt nach Abschluss der Polymerisationsreaktion zum wässrigen Dispergiermedium, bedeuten. Dabei ist es für den Fachmann selbstverständlich, dass ein wässriges Dispergiermedium nach Abschluss der Polymerisationsreaktion noch kleine Mengen (≤ 5 Gew.-%, vorteilhaft ≤ 2 Gew.-% und insbesondere vorteilhaft ≤ 1 Gew.-%, bezogen auf die Gesamtmonomerenmenge) an nicht umgesetzten ethylenisch ungesättigten Monomeren, sogenannte Restmonomeren, enthalten kann. Im Rahmen dieser Schrift bedeutet daher "nach der Herstellung der wässrigen Kompostipartikel-Dispersion" die Zugabe der Silanverbindung I zum wässrigen Dispergiermedium Abschluss der Polymerisationsreaktion. Bei der Herstellung von wässrigen Kompositpartikel-Dispersion durch Polymerisation von ethylenisch ungesättigten Verbindungen in Anwesenheit eines feinteiligen anorganischen Feststoffs gilt die Polymerisation dann als beendet, sobald kein merklicher Umsatz an ethylenisch ungesättigten Verbindungen mehr stattfindet. Dies ist in der Regel der Fall, wenn der Gesamtmonomerenumsatz ≥ 95 Gew.-%, vorteilhaft ≥ 98 Gew.-% und insbesondere vorteilhaft ≥ 99 Gew.-% beträgt. Wird jedoch im Nachgang zur Polymerisationsreaktion der Gehalt an noch verbliebenen Restmonomeren mit einem zur vorherigen Polymerisationsreaktion unterschiedlichen Radikalinitiatorsystem in einem separaten Schritt weiter reduziert, so kann die Silanverbindung I dem wässrigen Dispergiermedium vor, während oder nach der Restmonomerenentfernung zugegeben werden. Mit Vorteil wird jedoch in einem solchen Fall die Silanverbindung I dem wässrigen Medium nach der Restmonomerenentfernung zugesetzt.

Von besonderem Vorteil für das erfindungsgemäße Verfahren ist, wenn die Silanverbindung I dem wässrigen Dispergiermedium der wässrigen Kompositpartikel-Dispersion nach der Herstellung der wässrigen Kompositpartikel-Dispersion zugesetzt wird. Dabei ist es selbstverständlich, dass die Bedeutung von "nach der Herstellung der wässrigen Kompositpartikel-Dispersion" auch die Herstellung einer wässrigen Formulierung mit einschließt, bei deren Herstellung, neben anderen Formulierungsbestandteilen, auch eine wässrige Kompositpartikel-Dispersion und separat wenigstens eine Silanverbindung I zugegeben wird.

Dabei kann die Silanverbindung I dem wässrigen Medium sowohl während oder nach der Herstellung der wässrigen Kompositpartikel-Dispersion als separater Einzelstrom oder im Gemisch mit anderen Komponenten diskontinuierlich in einer oder mehreren Portionen oder kontinuierlich mit gleichbleibendem oder sich änderndem Mengenstrom zudosiert werden.

Günstig ist es, wenn die wenigstens eine Silanverbindung I enthaltende wässrige Kompositpartikel-Dispersion oder eine diese enthaltende wässrige Formulierung einen pH-Wert ≥ 4, ≥ 5, ≥ 6 oder ≥ 7 und ≤ 10, ≤ 11, ≤ 12 oder ≤ 13 aufweist. Vorteilhaft wird ein pH-Wert im Bereich von ≥ 7 und ≤ 11 eingestellt. Mit besonderem Vorteil weist die wässrige Kompositpartikel-Dispersion bereits vorab der Zugabe einer Silanverbindung I einen pH-Wert im Bereich von ≥ 7 und ≤ 11 auf. Die Messung der pH-Werte erfolgt erfindungsgemäß bei 20 bis 25 °C (Raumtemperatur) mit einem geeichten pH-Meter.

Dabei stehen in der organischen Silanverbindung der allgemeinen Formel (I) die Substituenten R¹ bis R³ für:
- C₁-C₁₀-Alkoxy, insbesondere für Methoxy, Ethoxy, n-Propoxy oder iso-Propoxy, n-Butoxy, tert.-Butoxy und insbesondere vorteilhaft für Methoxy und Ethoxy,
- unsubstituiertes oder substituiertes C₁-C₃₀-Alkyl, insbesondere jedoch für unsubstituiertes Alkyl, wie Methyl, Ethyl, n-Propyl, iso-Propyl, n-Butyl, iso-Butyl, tert.-Butyl, n-Pentyl, n-Octyl, n-Decyl, n-Hexadecyl und deren Isomeren oder für substituiertes Alkyl, beispielsweise substituiert mit einer oder mehreren Amino-, Acetoxy-, Benzoyl-, Halogen-, Cyano-, Glycidyloxy-, Hydroxy-, Isocyanato-, Mercapto-, Phenoxy-, Phosphato- oder Isothiocyanatogruppen,
- unsubstituiertes oder substituiertes (entsprechende Substituenten siehe C₁-C₃₀-Alkyl) C₅-C₁₅-Cycloalkyl, insbesondere jedoch für Cyclopentyl oder Cyclohexyl,
- unsubstituiertes oder substituiertes (entsprechende Substituenten siehe C₁-C₃₀-Alkyl) C₆-C₁₀-Aryl, insbesondere jedoch für Phenyl, Halogenophenyl oder Chlorosulfonylphenyl, oder
- unsubstituiertes oder substituiertes (entsprechende Substituenten siehe C₁-C₃₀-Alkyl) C₇-C₁₂-Aralkyl, insbesondere jedoch für Benzyl,
wobei wenigstens einer der Reste R¹ bis R³ für C₁-C₁₀-Alkoxy steht. Mit Vorteil stehen wenigstens zwei der Reste R¹ bis R³ und mit besonderem Vorteil alle drei Reste R¹ bis R³ für C₁-C₁₀-Alkoxy, wobei Methoxy- und/oder Ethoxygruppen insbesondere bevorzugt sind. Stehen lediglich ein oder zwei der Reste R¹ bis R³ für C₁-C₁₀-Alkoxy, stehen die verbleibenden Reste bevorzugt für C₁-C₁₀-Alkyl, insbesondere Methyl und/oder Ethyl.

Darüber hinaus steht in der organischen Silanverbindung I
R4 für: 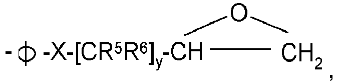 wobei Φ für:
- unsubstituiertes oder substituiertes C₁-C₃₀-Alkylen, insbesondere jedoch für unsubstituiertes Alkylen, wie Methylen (-CH₂-), Ethylen (-CH₂CH₂-), n-Propylen (-CH₂CH₂CH₂-), isoPropylen (-CH₂CH(CH₃)-), n-Butylen (-CH₂CH₂CH₂CH₂-), iso-Butylen (-CH₂CH(CH₃)CH₂-), tert.-Buty-len (-CH₂C(CH₃)₂-), n-Pentylen, n-Octylen, n-Decylen, n-Hexadecylen und deren Isomeren oder für substituiertes C₁-C₃₀-Alkylen, beispielsweise substituiert mit einer oder mehreren Amino-, Acetoxy-, Benzoyl-, Halogen-, Cyano-, Glycidyloxy-, Hydroxy-, Isocyanato-, Mercapto-, Phenoxy-, Phosphato- oder Isothiocyanatogruppen,
- unsubstituiertes oder substituiertes (entsprechende Substituenten siehe C₁-C₃₀-Alkylen) C₅-C₁₅-Cycloalkylen, insbesondere jedoch für 1,2- und 1,3-Cyclopentylen oder 1,2-, 1,3-sowie 1,4-Cyclohexylen,
- unsubstituiertes oder substituiertes (entsprechende Substituenten siehe C₁-C₃₀-Alkylen) C₆-C₁₀-Arylen, insbesondere jedoch für 1,2-, 1,3- und 1,4-Phenylen sowie 1,2-, 1,4- oder 1,8-Napthylen, oder
- unsubstituiertes oder substituiertes (entsprechende Substituenten siehe C₁-C₃₀-Alkylen) C₇-C₁₂-Aralkylen, insbesondere jedoch für Benzylen
steht. Mit Vorteil steht Φ jedoch für eine unsubstituierte C₁-C₅-Alkylengruppe, wobei eine C₂-C₄-Alkylengruppe besonders bevorzugt ist. Mit besonderem Vorteil steht Φ für eine Ethylen-, eine n-Propylen- oder eine n-Butylengruppe und insbesondere für eine n-Propylengruppe.

Darüber hinaus stehen in der Gruppe R⁴ der Silanverbindung I
- X:: für Sauerstoff, NR⁷ oder CR⁸R⁹, wobei Sauerstoff bevorzugt ist,
- R⁵ bis R⁹:: für Wasserstoff, C₁-C₄-Alkyl, wie Methyl, Ethyl, n-Propyl, iso-Propyl, n-Butyl, isoButyl, tert.-Butyl, wobei Wasserstoff insbesondere bevorzugt ist,
- n:: für eine ganze Zahl von 0 bis 5, bevorzugt für 0 und 1 und insbesondere bevorzugt für 0,
- y:: für eine ganze Zahl von 0 bis 5, bevorzugt für 0 und 1 und insbesondere bevorzugt für 1.

Besonders vorteilhaft sind Silanverbindungen I, in denen R¹ und R² für Methoxy oder Ethoxy, R³ für Methoxy, Ethoxy, Methyl oder Ethyl, Φ für Ethylen, n-Propylen oder n-Butylen, X für Sauerstoff, R⁵ und R⁶ für Wasserstoff und y für die Zahl 1 stehen. Mit besonderem Vorteil werden erfindungsgemäß (3-Glycidyloxypropyl)trimethoxysilan und/oder (3-Glycidyloxypropyl)methyl-diethoxysilan eingesetzt. Die Silanverbindungen I lassen sich nach dem Fachmann geläufigen Verfahren herstellen oder direkt im Handel beziehen (beispielsweise Dynsilan^{®} GLYMO [Marke der Fa. Evonik Industries GmbH], Geniosil^{®} GF 80 oder Geniosil^{®} GF 82 [Marken der Fa. Wacker Chemie AG] oder Silquest^{®} A-187, Silquest^{®} A-1871 und WetLink^{®} 78 [Marken der Fa. Momentive Performance Materials Inc.]).

Im erfindungsgemäßen Verfahren beträgt die Menge der Silanverbindung I vorteilhaft 0,01 bis 10 Gew.-%, bevorzugt 0,03 bis 5 Gew.-% und insbesondere bevorzugt 0,05 bis 1 Gew.-%, jeweils bezogen auf die Gesamtmenge der wässrigen Kompositpartikel-Dispersion. Häufig ist es dabei erfindungsgemäß vorteilhaft, wenn die Menge der Silanverbindung I 0,1 bis 20 Gew.-%, bevorzugt 0,1 bis 10 Gew.-% und insbesondere bevorzugt 0,25 bis 5 Gew.-%, jeweils bezogen auf die Gesamtmenge der in der wässrigen Dispersion oder Formulierung enthaltenen Kompositpartikel, beträgt. Dabei kann die Gesamtmenge der Silanverbindung I dem wässrigen Dispergiermedium während oder nach der Herstellung der Kompositpartikel zugesetzt werden. Selbstverständlich ist es auch möglich, eine Teilmenge der Silanverbindung I dem wässrigen Medium während der Herstellung der Kompositpartikel und die verbleibende Restmenge der erhaltenen wässrigen Dispersion der Kompositpartikel zuzusetzen. Mit Vorteil wird jedoch die Gesamtmenge der Silanverbindung I der wässrigen Kompositpartikel-Dispersion oder der diese enthaltenden wässrigen Formulierung zugesetzt. Es ist jedoch auch möglich, eine Teilmenge der Silanverbindung I der wässrigen Kompositpartikel-Dispersion und die verbliebene Restmenge der Silanverbindung I der die wässrige Kompositpartikel-Dispersion enthaltenden wässrigen Formulierung zuzusetzen.

Das erfindungsgemäße Verfahren eignet sich vorteilhaft für solche wässrigen Kompositpartikel-Dispersionen, welche nach einer in der WO 03000760 offenbarten Verfahrensweise - auf die im Rahmen dieser Schrift ausdrücklich Bezug genommen werden soll - hergestellt wurden. Dieses Verfahren zeichnet sich dadurch aus, dass wenigstens ein ethylenisch ungesättigtes Monomer in wässrigem Medium dispers verteilt und mittels wenigstens eines radikalischen Polymerisationsinitiators im Beisein wenigstens eines dispers verteilten, feinteiligen anorganischen Feststoffs und wenigstens eines Dispergiermittels nach der Methode der radikalisch wässrigen Emulsionspolymerisation polymerisiert wird, wobei
a) eine stabile wässrige Dispersion des wenigstens einen anorganischen Feststoffs eingesetzt wird, welche dadurch charakterisiert ist, dass sie bei einer Anfangsfeststoffkonzentration von ≥ 1 Gew.-%, bezogen auf die wässrige Dispersion des wenigstens einen anorganischen Feststoffs, noch eine Stunde nach ihrer Herstellung mehr als 90 Gew.-% des ursprünglich dispergierten Feststoffes in dispergierter Form enthält und deren dispergierte Feststoffteilchen einen gewichtsmittleren Durchmesser ≤ 100 nm aufweisen,
b) die dispergierten Feststoffteilchen des wenigstens einen anorganischen Feststoffs in einer wässrigen Standardkaliumchlorid-Lösung bei einem pH-Wert, der dem pH-Wert des wässrigen Dispergiermediums vor Beginn der Zugabe der Dispergiermittel entspricht, eine von Null verschiedene elektrophoretische Mobilität zeigen,
c) die wässrige Feststoffteilchendispersion vor Beginn der Zugabe des wenigstens einen ethylenisch ungesättigten Monomeren mit wenigstens einem anionischen, kationischen und nichtionischen Dispergiermittel versetzt wird,
d) danach von der Gesamtmenge des wenigstens einen Monomeren 0,01 bis 30 Gew.-% der wässrigen Feststoffteilchendispersion zugesetzt und bis zu einem Umsatz von wenigstens 90 % polymerisiert werden
   und
e) daran anschließend die Restmenge des wenigstens einen Monomeren unter Polymerisationsbedingungen nach Maßgabe des Verbrauchs kontinuierlich zugegeben wird.

Das erfindungsgemäße Verfahren eignet sich ebenfalls vorteilhaft für solche wässrigen Kompositpartikel-Dispersionen, welche nach einer vom Anmelder in der nicht vorveröffentlichten Patentanmeldung PCT/EP2010/054332, basierend auf der prioritätsbegründenden europäischen Patentanmeldung mit Anmeldungs-Nr. 09157984.7 offenbarten Verfahrensweise - auf die im Rahmen dieser Schrift ausdrücklich Bezug genommen werden soll - hergestellt wurden. Diese Verfahrensweise zeichnet sich dadurch aus, dass wenigstens ein ethylenisch ungesättigtes Monomer in einem wässrigen Medium dispers verteilt und mittels wenigstens eines radikalischen Polymerisationsinitiators im Beisein wenigstens eines dispers verteilten, feinteiligen anorganischen Feststoffes und wenigstens eines Dispergierhilfsmittels nach der Methode der radikalisch wässrigen Emulsionspolymerisation polymerisiert werden, wobei
a) 1 bis 1000 Gew.-% eines anorganischen Feststoffes mit einer mittleren Teilchengröße ≤ 100 nm und 0,05 bis 2 Gew.-% eines radikalischen Polymerisationsinitiators, bezogen auf die Gesamtmenge an ethylenisch ungesättigten Monomeren (Gesamtmonomerenmenge) eingesetzt werden,
b) wenigstens eine Teilmenge des anorganischen Feststoffs in einem wässrigen Polymerisationsmedium in Form einer wässrigen Feststoffdispersion vorgelegt wird, daran anschließend
c) der erhaltenen wässrigen Feststoffdispersion insgesamt ≥ 0,01 und ≤ 20 Gew.-% der Gesamtmonomerenmenge und ≥ 60 Gew.-% der Gesamtmenge an radikalischem Polymerisationsinitiator zudosiert und die zudosierten ethylenisch ungesättigten Monomeren unter Polymerisationsbedingungen bis zu einem Monomerenumsatz ≥ 80 Gew.-% polymerisiert werden (Polymerisationsstufe 1), und daran anschließend dem erhaltenen Polymerisationsgemisch
d) die gegebenenfalls verbliebene Restmenge des anorganischen Feststoffs, die gegebenenfalls verbliebene Restmenge des radikalischen Polymerisationsinitiators und die verbliebene Restmenge der ethylenisch ungesättigten Monomeren unter Polymerisationsbedingungen zudosiert und bis zu einem Monomerenumsatz ≥ 90 Gew.-% polymerisiert werden (Polymerisationsstufe 2).

Für das in der WO 03000760 offenbarte Verfahren sind alle diejenigen feinteiligen anorganischen Feststoffe geeignet, welche stabile wässrige Dispersionen ausbilden, die bei einer Anfangsfeststoffkonzentration von ≥ 1 Gew.-%, bezogen auf die wässrige Dispersion des wenigstens einen anorganischen Feststoffs, noch eine Stunde nach ihrer Herstellung ohne Rühren oder Schütteln mehr als 90 Gew.-% des ursprünglich dispergierten Feststoffes in dispergierter Form enthalten und deren dispergierten Feststoffteilchen einen Durchmesser ≤ 100 nm aufweisen und darüber hinaus bei einem pH-Wert, der dem pH-Wert des wässrigen Reaktionsmediums vor Beginn der Zugabe der Dispergiermittel entspricht, eine von Null verschiedene elektrophoretische Mobilität zeigen.

Die quantitative Bestimmung der Anfangsfeststoffkonzentration und der Feststoffkonzentration nach einer Stunde sowie die Ermittlung der Teilchendurchmesser erfolgt über die Methode der Analytischen Ultrazentrifuge (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175). Die bei den Teilchendurchmesser angegebenen Werte entsprechen den sogenannten d₅₀-Werten.

Die Methode zur Bestimmung der elektrophoretischen Mobilität ist dem Fachmann bekannt (vgl. z.B. R.J. Hunter, Introduction to modern Colloid Science, Kapitel 8.4, Seiten 241 bis 248, Oxford University Press, Oxford, 1993 sowie K. Oka und K. Furusawa, in Electrical Phenomena at Interfaces, Surfactant Science Series, Vol. 76, Kapitel 8, Seiten 151 bis 232, Marcel Dekker, New York, 1998). Die elektrophoretische Mobilität der im wässrigen Reaktionsmedium dispergierten Feststoffteilchen wird mittels eines handelsüblichen Elektrophoresegeräts, wie beispielsweise dem Zetasizer 3000 der Fa. Malvern Instruments Ltd., bei 20 °C und 1 bar (absolut) bestimmt. Hierzu wird die wässrige Feststoffteilchendispersion mit einer pH-neutralen 10 millimolaren (mM) wässrigen Kaliumchlorid-Lösung (Standardkaliumchlorid-Lösung) soweit verdünnt, dass die Feststoffteilchen-Konzentration ca. 50 bis 100 mg/l beträgt. Die Einstellung der Messprobe auf den pH-Wert, den das wässrige Reaktionsmedium vor Beginn der Zugabe der Dispergiermittel aufweist, erfolgt mittels der gängigen anorganischen Säuren, wie beispielsweise verdünnte Salzsäure oder Salpetersäure oder Basen, wie beispielsweise verdünnte Natronlauge oder Kalilauge. Die Wanderung der dispergierten Feststoffteilchen im elektrischen Feld wird mittels der sogenannten elektrophoretischen Lichtstreuung detektiert (vgl. z.B. B.R. Ware und W.H. Flygare, Chem. Phys. Lett. 1971, 12, Seiten 81 bis 85). Dabei wird das Vorzeichen der elektrophoretischen Mobilität durch die Wanderungsrichtung der dispergierten Feststoffteilchen definiert, d.h. wandern die dispergierten Feststoffteilchen zur Kathode, ist deren elektrophoretische Mobilität positiv, wandern sie dagegen zur Anode, ist sie negativ.

Ein geeigneter Parameter, um die elektrophoretische Mobilität von dispergierten Feststoffteilchen in einem gewissen Umfang zu beinflussen oder einzustellen, ist der pH-Wert des wässrigen Reaktionsmediums. Durch Protonierung bzw. Deprotonierung der dispergierten Feststoffteilchen wird die elektrophoretische Mobilität im sauren pH-Bereich (pH-Wert < 7) in positiver und im alkalischen Bereich (pH-Wert > 7) in negativer Richtung verändert. Ein für das in der WO 03000760 offenbarte Verfahren geeigneter pH-Bereich ist der, innerhalb dessen sich eine radikalisch initiierte wässrige Emulsionspolymerisation durchführen läßt. Dieser pH-Bereich liegt in der Regel bei pH 1 bis 12, häufig bei pH 1,5 bis 11 und oft bei pH 2 bis 10.

Der pH-Wert des wässrigen Reaktionsmediums kann mittels handelsüblicher Säuren, wie beispielsweise verdünnte Salz-, Salpeter- oder Schwefelsäure oder Basen, wie beispielsweise verdünnte Natron- oder Kalilauge, eingestellt werden. Häufig ist es günstig, wenn eine Teil- oder die Gesamtmenge der zur pH-Einstellung verwendeten Säure- oder Basenmenge dem wässrigen Reaktionsmedium vor dem wenigstens einen feinteiligen anorganischen Feststoff zugesetzt wird.

Vorteilhaft für das gemäß WO 03000760 offenbarte Verfahren ist, dass dann, wenn die dispergierten Feststoffteilchen unter den vorgenannten pH-Bedingungen
- eine elektrophoretische Mobilität mit negativem Vorzeichen aufweisen, pro 100 Gew.-Teilen des wenigstens einen ethylenisch ungesättigten Monomeren, 0,01 bis 10 Gew.-Teile, bevorzugt 0,05 bis 5 Gew.-Teile und insbesondere bevorzugt 0,1 bis 3 Gew.-Teile wenigstens eines kationischen Dispergiermittels, 0,01 bis 100 Gew.-Teile, bevorzugt 0,05 bis 50 Gew.-Teile und insbesondere bevorzugt 0,1 bis 20 Gew.-Teile wenigstens eines nichtionischen Dispergiermittels und wenigstens ein anionisches Dispergiermittel eingesetzt werden, wobei dessen Menge so bemessen wird, dass das äquivalente Verhältnis von anionischem zu kationischem Dispergiermittel größer 1 ist, oder
- eine elektrophoretische Mobilität mit positivem Vorzeichen aufweisen, pro
   100 Gew.-Teilen des wenigstens einen ethylenisch ungesättigten Monomeren, 0,01 bis 10 Gew.-Teile, bevorzugt 0,05 bis 5 Gew.-Teile und insbesondere bevorzugt 0,1 bis 3 Gew.-Teile wenigstens eines anionischen Dispergiermittels, 0,01 bis 100 Gew.-Teile, bevorzugt 0,05 bis 50 Gew.-Teile und insbesondere bevorzugt 0,1 bis 20 Gew.-Teile wenigstens eines nichtionischen Dispergiermittels und wenigstens ein kationisches Dispergiermittel eingesetzt werden, wobei dessen Menge so bemessen wird, dass das äquivalente Verhältnis von kationischem zu anionischem Dispergiermittel größer 1 ist.

Unter äquivalentem Verhältnis von anionischem zu kationischem Dispergiermittel wird das Verhältnis der eingesetzten Molzahl des anionischen Dispergiermittels multipliziert mit der Anzahl der pro Mol des anionischen Dispergiermittels enthaltenen anionischen Gruppen dividiert durch die eingesetzte Molzahl des kationischen Dispergiermittels multipliziert mit der Anzahl der pro Mol des kationischen Dispergiermittels enthaltenen kationischen Gruppen verstanden. Entsprechendes gilt für das äquivalente Verhältnis von kationischem zu anionischem Dispergiermittel.

Die Gesamtmenge des gemäß der WO 03000760 verwendeten wenigstens einen anionischen, kationischen und nichtionischen Dispergiermittels kann in der wässrigen Feststoffdispersion vorgelegt werden. Es ist jedoch auch möglich, lediglich eine Teilmenge der genannten Dispergiermittel, in der wässrigen Feststoffdispersion vorzulegen und die verbliebenen Restmengen während der radikalischen Emulsionspolymerisation kontinuierlich oder diskontinuierlich zuzugeben. Verfahrenswesentlich ist jedoch, dass vor und während der radikalisch initiierten Emulsionspolymerisation das vorgenannte äquivalente Verhältnis von anionischem und kationischem Dispergiermittel in Abhängigkeit vom elektrophoretischen Vorzeichen des feinteiligen Feststoffs aufrechterhalten wird. Werden daher anorganische Feststoffteilchen eingesetzt, welche unter den vorgenannten pH-Bedingungen eine elektrophoretische Mobilität mit negativem Vorzeichen aufweisen, so muss das äquivalente Verhältnis von anionischem zu kationischem Dispergiermittel während der gesamten Emulsionspolymerisation größer 1 sein. In entsprechender Weise muss bei anorganischen Feststoffteilchen mit einer elektrophoretischen Mobilität mit positivem Vorzeichen das äquivalente Verhältnis von kationischem zu anionischem Dispergiermittel während der gesamten Emulsionspolymerisation größer 1 sein. Günstig ist es, wenn die äquivalenten Verhältnisse ≥ 2, ≥ 3, ≥ 4, ≥ 5, ≥ 6, ≥ 7, oder ≥ 10 sind, wobei die äquivalenten Verhältnisse im Bereich zwischen 2 und 5 besonders günstig sind.

Für die beiden vorgenannten explizit offenbarten Verfahren sowie allgemein zur Herstellung von Kompositpartikeln einsetzbare feinteilige anorganische Feststoffe sind Metalle, Metallverbindungen, wie Metalloxide und Metallsalze aber auch Halbmetall- und Nichtmetallverbindungen geeignet. Als feinteilige Metallpulver können Edelmetallkolloide, wie beispielsweise Palladium, Silber, Ruthenium, Platin, Gold und Rhodium sowie diese enthaltende Legierungen eingesetzt werden. Als feinteilige Metalloxide beispielhaft genannt seien Titandioxid (beispielsweise kommerziell verfügbar als Hombitec^{®}-Marken der Fa. Sachtleben Chemie GmbH), Zirkonium-(IV)-oxid, Zinn-(II)-oxid, Zinn-(IV)-oxid (beispielsweise kommerziell verfügbar als Nyacol^{®} SN-Marken der Fa. Nyacol Nano Technologies Inc.), Aluminiumoxid (beispielsweise kommerziell verfügbar als Nyacol^{®} AL-Marken der Fa. Nyacol Nano Technologies Inc.), Bariumoxid, Magnesiumoxid, verschiedene Eisenoxide, wie Eisen-(II)-oxid (Wuestit), Eisen-(III)-oxid (Hämatit) und Eisen-(II/III)-oxid (Magnetit), Chrom-(III)-oxid, Antimon-(III)-oxid, Wismut-(III)-oxid, Zinkoxid (beispielsweise kommerziell verfügbar als Sachtotec^{®}-Marken der Fa. Sachtleben Chemie GmbH), Nickel-(II)-oxid, Nickel-(III)-oxid, Cobalt-(II)-oxid, Cobalt-(III)-oxid, Kupfer-(II)-oxid, Yttrium-(III)-oxid (beispielsweise kommerziell verfügbar als Nyacol^{®} YTTRIA-Marken der Fa. Nyacol Nano Technologies Inc.), Cer-(IV)-oxid (beispielsweise kommerziell verfügbar als Nyacol^{®} CEO2-Marken der Fa. Nyacol Nano Technologies Inc.) amorph und/oder in ihren unterschiedlichen Kristallmodifikationen sowie deren Hydroxyoxide, wie beispielsweise Hydroxytitan-(IV)-oxid, Hydroxyzirkonium-(IV)-oxid, Hydroxyaluminiumoxid (beispielsweise kommerziell verfügbar als Disperal^{®}-Marken der Fa. Sasol GmbH) und Hydroxyeisen-(III)-oxid amorph und/oder in ihren unterschiedlichen Kristallmodifikationen. Folgende amorphen und/oder in ihren unterschiedlichen Kristallstrukturen vorliegenden Metallsalze sind im erfindungsgemäßen Verfahren prinzipiell einsetzbar: Sulfide, wie Eisen-(II)-sulfid, Eisen-(III)-sulfid, Eisen-(II)-disulfid (Pyrit), Zinn-(II)-sulfid, Zinn-(IV)-sulfid, Quecksilber-(II)-sulfid, Cadmium-(II)-sulfid, Zinksulfid, Kupfer-(II)-sulfid, Silbersulfid, Nickel-(II)-sulfid, Cobalt-(II)-sulfid, Cobalt-(III)-sulfid, Mangan-(II)-sulfid, Chrom-(III)-sulfid, Titan-(II)-sulfid, Titan-(III)-sulfid, Titan-(IV)-sulfid, Zirkon-(IV)-sulfid, Antimon-(III)-sulfid, Wismut-(III)-sulfid, Hydroxide, wie Zinn-(II)-hydroxid, Aluminiumhydroxid, Magnesiumhydroxid, Calciumhydroxid, Bariumhydroxid, Zinkhydroxid, Eisen-(II)-hydroxid, Eisen-(III)-hydroxid, Sulfate, wie Calciumsulfat, Strontiumsulfat, Bariumsulfat, Blei-(IV)-sulfat, Carbonate, wie Lithiumcarbonat, Magnesiumcarbonat, Calciumcarbonat, Zinkcarbonat, Zirkonium-(IV)-carbonat, Eisen-(II)-carbonat, Eisen-(III)-carbonat, Orthophosphate, wie Lithiumorthophosphat, Calciumorthophosphat, Zinkorthophosphat, Magnesiumorthophosphat, Aluminiumorthophosphat, Zinn-(III)-orthophosphat, Eisen-(II)-orthophosphat, Eisen-(III)-orthophosphat, Metaphosphate, wie Lithiummetaphosphat, Calciummetaphosphat, Aluminiummetaphosphat, Pyrophosphate, wie Magnesiumpyrophosphat, Calciumpyrophosphat, Zinkpyrophosphat, Eisen-(III)-pyrophosphat, Zinn-(II)-pyrophosphat, Ammoniumphosphate, wie Magnesiumammoniumphosphat, Zinkammoniumphosphat, Hydroxylapatit [Ca₅{(PO₄)₃OH}], Orthosilikate, wie Lithiumorthosilikat, Calcium-/Magnesiumorthosilikat, Aluminiumorthosilikat, Eisen-(II)-orthosilikat, Eisen-(III)-orthosilikat,Magnesiumorthosilikat, Zinkorthosilikat, Zirkonium-(III)-orthosilikat, Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat und Natriummagnesiumsilikat insbesondere in spontan delaminierender Form, wie beispielsweise Optigel^{®} SH (Marke der Rockwood Specialties Inc.), Saponit^{®} SKS-20 und Hektorit^{®} SKS 21 (Marken der Hoechst AG) sowie Laponite^{®} RD und Laponite^{®} GS (Marken der Rockwood Specialties Inc.), Aluminate, wie Lithiumaluminat, Calciumaluminat, Zinkaluminat, Borate, wie Magnesiummetaborat, Magnesiumorthoborat, Oxalate, wie Calciumoxalat, Zirkonium-(IV)-oxalat, Magnesiumoxalat, Zinkoxalat, Aluminiumoxalat, Tatrate, wie Calciumtatrat, Acetylacetonate, wie Aluminiumacetylacetonat, Eisen-(III)-acetylacetonat, Salicylate, wie Aluminiumsalicylat, Citrate, wie Calciumcitrat, Eisen-(II)-citrat, Zinkcitrat, Palmitate, wie Aluminiumpalmitat, Calciumpalmitat, Magnesiumpalmitat, Stearate, wie Aluminiumstearat, Calciumstearat, Magnesiumstearat, Zinkstearat, Laurate, wie Calciumlaurat, Linoleate, wie Calciumlinoleat, Oleate, wie Calciumoleat, Eisen-(II)-oleat oder Zinkoleat.

Als wesentliche einsetzbare Halbmetallverbindung sei amorphes und/oder in unterschiedlichen Kristallstrukturen vorliegendes Siliziumdioxid genannt. Entsprechend geeignetes Siliziumdioxid ist kommerziell verfügbar und kann beispielsweise als Aerosil^{®} (Marke der Fa. Evonik Industries AG), Levasil^{®} (Marke der Fa. H.C. Starck GmbH), Ludox^{®} (Marke der Fa. DuPont), Nyacol^{®} (Marke der Fa. Nyacol Nano-Technologies Inc.), Bindzil^{®} (Marke der Fa. Akzo Nobel N.V.), Nalco^{®} (Marke der Fa. Nalco Chemical Company) und Snowtex^{®} (Marke der Fa. Nissan Chemical Industries, Ltd.) bezogen werden. Geeignete Nichtmetallverbindungen sind beispielsweise kolloidal vorliegender Graphit oder Diamant.

Als feinteilige anorganische Feststoffe sind solche besonders geeignet, deren Löslichkeit in Wasser bei 20 °C und 1 bar (absolut) ≤ 1 g/l, bevorzugt ≤ 0,1 g/l und insbesondere ≤ 0,01 g/l ist. Besonders bevorzugt sind Verbindungen ausgewählt aus der Gruppe umfassend Siliziumdioxid, Aluminiumoxid, Zinn-(IV)-oxid, Yttrium-(III)-oxid, Cer-(IV)-oxid, Hydroxyaluminiumoxid, Calciumcarbonat, Magnesiumcarbonat, Calciumorthophosphat, Magnesiumorthophosphat, Calciummetaphospat, Magnesiummetaphosphat, Calciumpyrophosphat, Magnesiumpyrophosphat, Orthosilikate, wie Lithiumorthosilikat, Calcium-/Magnesiumorthosilikat, Aluminiumorthosilikat, Eisen-(II)-orthosilikat, Eisen-(III)-orthosilikat,Magnesiumorthosilikat, Zinkorthosilikat, Zirkonium-(III)-orthosilikat, Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat und Natriummagnesiumsilikat insbesondere in spontan delaminierender Form, wie beispielsweise Optigel^{®} SH, Saponit^{®} SKS-20 und Hektorit^{®} SKS 21 sowie Laponite^{®} RD und Laponite^{®} GS, Eisen-(II)-oxid, Eisen-(III)-oxid, Eisen-(II/III)-oxid, Titandioxid, Hydroxylapatit, Zinkoxid und Zinksulfid. Insbesondere bevorzugt sind siliziumhaltige Verbindungen, wie pyrogene und/oder kolloidale Kieselsäure, Siliziumdioxid-Sole und/oder Schichtsilikate. Häufig weisen diese siliziumhaltigen Verbindungen eine elektrophoretische Mobilität mit negativem Vorzeichen auf.

Vorteilhaft können auch die kommerziell verfügbaren Verbindungen der Aerosil^{®}-, Levasil^{®}-, Ludox^{®}-, Nyacol^{®}- und Bindzil^{®}-Marken (Siliziumdioxid), Disperal^{®}-Marken (Hydroxyaluminiumoxid), Nyacol^{®} AL-Marken (Aluminiumoxid), Hombitec^{®}-Marken (Titandioxid), Nyacol^{®} SN-Marken (Zinn-(IV)-oxid), Nyacol^{®} YTTRIA-Marken (Yttrium-(III)-oxid), Nyacol^{®} CEO2-Marken (Cer-(IV)-oxid) und Sachtotec^{®}-Marken (Zinkoxid) in den vorgenannten Verfahren sowie allgemein zur Herstellung wässriger Kompositpartikel-Dispersionen eingesetzt werden.

Die zur Herstellung der Kompositpartikel einsetzbaren feinteiligen anorganischen Feststoffe sind so beschaffen, dass die im wässrigen Reaktionsmedium dispergierten Feststoffteilchen einen Teilchendurchmesser von ≤ 100 nm aufweisen. Erfolgreich werden solche feinteiligen anorganischen Feststoffe eingesetzt, deren dispergierte Teilchen einen Teilchendurchmesser > 0 nm aber ≤ 90 nm, ≤ 80 nm, ≤ 70 nm, ≤ 60 nm, ≤ 50 nm, ≤ 40 nm, ≤ 30 nm, ≤ 20 nm oder ≤ 10 nm und alle Werte dazwischen aufweisen. Von Vorteil werden feinteilige anorganische Feststoffe eingesetzt, welche einen Teilchendurchmesser ≤ 50 nm aufweisen. Die Ermittlung der Teilchendurchmesser erfolgt über die Methode der Analytischen Ultrazentrifuge.

Die Zugänglichkeit feinteiliger Feststoffe ist dem Fachmann prinzipiell bekannt und erfolgt beispielsweise durch Fällungsreaktionen oder chemische Reaktionen in der Gasphase (vgl. hierzu E. Matijevic, Chem. Mater. 1993, 5, Seiten 412 bis 426; Ullmann's Encyclopedia of Industrial Chemistry, Vol. A 23, Seiten 583 bis 660, Verlag Chemie, Weinheim, 1992; D.F. Evans, H. Wennerström in The Colloidal Domain, Seiten 363 bis 405, Verlag Chemie, Weinheim, 1994 und R.J. Hunter in Foundations of Colloid Science, Vol. I, Seiten 10 bis 17, Clarendon Press, Oxford, 1991).

Die Herstellung der stabilen Feststoffdispersion erfolgt häufig direkt bei der Synthese der feinteiligen anorganischen Feststoffe in wässrigem Medium oder alternativ durch Eindispergieren des feinteiligen anorganischen Feststoffs in das wässrige Medium. Abhängig vom Herstellweg der feinteiligen anorganischen Feststoffe gelingt dies entweder direkt, beispielsweise beim gefälltem oder pyrogenem Siliziumdioxid, Aluminiumoxid etc. oder unter Zuhilfenahme geeigneter Hilfsaggregate, wie beispielsweise Dispergatoren oder Ultraschallsonotroden.

Vorteilhaft für die Herstellung der wässrigen Kompositpartikel-Dispersionen nach den beiden vorgenannten explizit offenbarten Verfahren, sind solche feinteiligen anorganischen Feststoffe geeignet, deren wässrige Feststoffdispersion bei einer Anfangsfeststoffkonzentration von ≥ 1 Gew.-%, bezogen auf die wässrige Dispersion des feinteiligen anorganischen Feststoffs, noch eine Stunde nach ihrer Herstellung bzw. durch Aufrühren oder Aufschütteln der sedimentierten Feststoffe, ohne weiteres Rühren oder Schütteln mehr als 90 Gew.-% des ursprünglich dispergierten Feststoffes in dispergierter Form enthält und deren dispergierten Feststoffteilchen einen Durchmesser ≤ 100 nm aufweisen. Üblich sind Anfangsfeststoffkonzentrationen ≤ 60 Gew.-%. Vorteilhaft können jedoch auch Anfangsfeststoffkonzentrationen ≤ 55 Gew.-%, ≤ 50 Gew.-%, ≤ 45 Gew.-%, ≤ 40 Gew.-%, ≤ 35 Gew.-%, ≤ 30 Gew.-%, ≤ 25 Gew.-%, ≤ 20 Gew.-%, ≤ 15 Gew.-%, ≤ 10 Gew.-% sowie ≥ 2 Gew.-%, ≥ 3 Gew.-%, ≥ 4 Gew.-% oder ≥ 5 Gew.-% und alle Werte dazwischen, jeweils bezogen auf die wässrige Dispersion des feinteiligen anorganischen Feststoffes, eingesetzt werden. Bezogen auf 100 Gew.-Teile des wenigstens einen ethylenisch ungesättigten Monomeren werden bei der Herstellung wässriger Kompositpartikel-Dispersionen häufig 1 bis 1000 Gew.-Teile, in der Regel 5 bis 300 Gew.-Teile und oft 10 bis 200 Gew.-Teile des wenigstens einen feinteiligen anorganischen Feststoffes verwendet.

Bei der Herstellung der beiden vorgenannten explizit offenbarten wässrigen Kompositpartikel-Dispersionen werden Dispergiermittel mitverwendet, die sowohl die feinteiligen anorganischen Feststoffteilchen als auch die Monomerentröpfchen und die gebildeten Kompositpartikel in der wässrigen Phase dispers verteilt halten und so die Stabilität der erzeugten wässrigen Kompositpartikel-Dispersionen gewährleisten. Als Dispergiermittel kommen sowohl die zur Durchführung von radikalischen wässrigen Emulsionspolymerisationen üblicherweise eingesetzten Schutzkolloide als auch Emulgatoren in Betracht.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Geeignete neutrale Schutzkolloide sind beispielsweise Polyvinylalkohole, Polyalkylenglykole, Cellulose-, Stärke- und Gelatinederivate.

Als anionische Schutzkolloide, d.h. Schutzkolloide, deren dispergierend wirkende Komponente wenigstens eine negative elektrische Ladung aufweist, kommen beispielsweise Polyacrylsäuren und Polymethacrylsäuren und deren Alkalimetallsalze, Acrylsäure, Methacrylsäure, 2-Acrylamido-2-methylpropansulfonsäure, 4-Styrolsulfonsäure und/oder Maleinsäureanhydrid enthaltende Copolymerisate und deren Alkalimetallsalze sowie Alkalimetallsalze von Sulfonsäuren hochmolekularer Verbindungen, wie beispielsweise Polystyrol, in Betracht.

Geeignete kationische Schutzkolloide, d.h. Schutzkolloide, deren dispergierend wirkende Komponente wenigstens eine positive elektrische Ladung aufweist, sind beispielsweise die am Stickstoff protonierten und/oder alkylierten Derivate von N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltenden Homo- und Copolymerisate.

Selbstverständlich können auch Gemische aus Emulgatoren und/oder Schutzkolloiden eingesetzt werden. Häufig werden als Dispergiermittel ausschließlich Emulgatoren eingesetzt, deren relative Molekulargewichte im Unterschied zu den Schutzkolloiden üblicherweise unter 1500 liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Gebräuchliche nichtionische Emulgatoren sind z.B. ethoxilierte Mono-, Di- und Tri-Alkylphenole (EO-Grad: 3 bis 50, Alkylrest: C₄ bis C₁₂) sowie ethoxilierte Fettalkohole (EO-Grad: 3 bis 80; Alkylrest: C₈ bis C₃₆). Beispiele hierfür sind die Lutensol^{®} A-Marken (C₁₂C₁₄-Fettalkoholethoxilate, EO-Grad: 3 bis 8), Lutensol^{®} AO-Marken (C₁₃C₁₅-Oxoalkoholethoxilate, EO-Grad: 3 bis 30), Lutensol^{®} AT-Marken (C₁₆C₁₈-Fettalkoholethoxilate, EO-Grad: 11 bis 80), Lutensol^{®} ON-Marken (C₁₀-Oxoalkoholethoxilate, EO-Grad: 3 bis 11) und die Lutensol^{®} TO-Marken (C₁₃-Oxoalkoholethoxilate, EO-Grad: 3 bis 20) der BASF AG.

Übliche anionische Emulgatoren sind z.B. Alkalimetall- und Ammoniumsalze von Alkylsulfaten (Alkylrest: C₈ bis C₁₂), von Schwefelsäurehalbestern ethoxylierter Alkanole (EO-Grad: 4 bis 30, Alkylrest: C₁₂ bis C₁₈) und ethoxilierter Alkylphenole (EO-Grad: 3 bis 50, Alkylrest: C₄ bis C₁₂), von Alkylsulfonsäuren (Alkylrest: C₁₂ bis C₁₈) und von Alkylarylsulfonsäuren (Alkylrest: C₉ bis C₁₈).

Als weitere anionische Emulgatoren haben sich ferner Verbindungen der allgemeinen Formel II 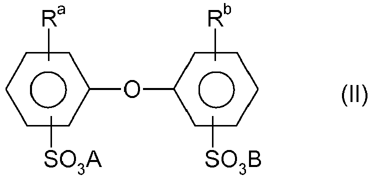 worin R^{a} und R^{b} H-Atome oder C₄- bis C₂₄-Alkyl bedeuten und nicht gleichzeitig H-Atome sind, und A und B Alkalimetallionen und/oder Ammoniumionen sein können, erwiesen. In der allgemeinen Formel II bedeuten R^{a} und R^{b} bevorzugt lineare oder verzweigte Alkylreste mit 6 bis 18 C-Atomen, insbesondere mit 6, 12 und 16 C-Atomen oder -H, wobei R^{a} und R^{b} nicht beide gleichzeitig H-Atome sind. A und B sind bevorzugt Natrium, Kalium oder Ammonium, wobei Natrium besonders bevorzugt ist. Besonders vorteilhaft sind Verbindungen II, in denen A und B Natrium, R^{a} ein verzweigter Alkylrest mit 12 C-Atomen und R^{b} ein H-Atom oder R^{a} ist. Häufig werden technische Gemische verwendet, die einen Anteil von 50 bis 90 Gew.-% des monoalkylierten Produktes aufweisen, wie beispielsweise Dowfax^{®} 2A1 (Marke der Dow Chemical Company). Die Verbindungen II sind allgemein bekannt, z.B. aus US-A 4 269 749, und im Handel erhältlich.

Geeignete kationenaktive Emulgatoren sind in der Regel einen C₆- bis C₁₈-Alkyl-, -Aralkyl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(N,N,N-Trimethylammonium)ethylparaffinsäureester, N-Cetylpyridiniumchlorid, N-Laurylpyridiniumsulfat sowie N-Cetyl-N,N,N-trimethylammoniumbromid, N-Dodecyl-N,N,N-tri-methylammoniumbromid, N-Octyl-N,N,N-trimethlyammoniumbromid, N,N-Distearyl-N,N-di-methylammoniumchlorid sowie das Gemini-Tensid N,N'-(Lauryldimethyl)ethylendiamindibromid. Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989.

Häufig werden zur Herstellung derwässrigen Kompositpartikel-Dispersionen zwischen 0,1 bis 10 Gew.-%, oft 0,5 bis 7,0 Gew.-% und häufig 1,0 bis 5,0 Gew.-% an Dispergiermittel, jeweils bezogen auf die Gesamtmenge an wässriger Kompositpartikel-Dispersion, eingesetzt. Bevorzugt werden Emulgatoren verwendet.
Für die Herstellung der Kompositpartikel kommen als ein ethylenisch ungesättigte Monomere u.a. insbesondere in einfacher Weise radikalisch polymerisierbare Monomere in Betracht, wie beispielsweise Ethylen, vinylaromatische Monomere, wie Styrol, α-Methylstyrol, o-Chlorstyrol oder Vinyltoluole, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl und -2-ethylhexylester, Maleinsäuredimethylester oder Maleinsäure-di-n-butylester, Nitrile α,β-monoethylenisch ungesättigter Carbonsäuren, wie Acrylnitril sowie C₄₋₈-konjugierte Diene, wie 1,3-Butadien und Isopren. Die genannten Monomere bilden in der Regel die Hauptmonomeren, die, bezogen auf die Gesamtmenge der nach dem erfindungsgemäßen Verfahren zu polymerisierenden Monomeren normalerweise einen Anteil von ≥ 50 Gew.-%, ≥ 80 Gew.-% oder ≥ 90 Gew.-% auf sich vereinen. In aller Regel weisen diese Monomeren in Wasser bei Normalbedingungen [20 °C, 1 atm = 1,013 bar absolut] lediglich eine mäßige bis geringe Löslichkeit auf.

Monomere, die üblicherweise die innere Festigkeit der Verfilmungen der Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-C₁-C₈-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Beispiele für epoxidgruppenhaltige Monomere sind Glycidlyacrylat und -methacrylat. Erfindungsgemäß werden die vorgenannten Monomeren, bezogen auf die Gesamtmenge der zu polymerisierenden Monomeren, in Mengen von bis zu 5 Gew.-% einpolymerisiert.

Häufig kann es vorteilhaft sein, neben den vorgenannten Monomeren zusätzlich ethylenisch ungesättigte Monomere einzusetzen, welche wenigstens eine silziumhaltige funktionelle Gruppe aufweisen (Silanmonomere), wie beispielsweise Vinylalkoxysilane, wie insbesondere Vinyltrimethoxysilan, Vinyltriethoxysilan, Vinyltriisopropoxysilan, Vinyltriphenoxysilan, Vinyltris(di-methylsiloxy)silan, Vinyltris(2-methoxyethoxy)silan, Vinyltris(3-methoxypropoxy)silan und/oder Vinyltris(trimethylsiloxy)silan, Acryloxysilane, wie insbesondere 2-(Acryloxyethoxy)trimethylsilan, Acryloxymethyltrimethylsilan, (3-Acryloxypropyl)dimethylmethoxysilan, (3-Acryloxypropyl)-methylbis(trimethylsiloxy)silan, (3-Acryloxypropyl)methyldimethoxysilan, (3-Acryloxypropyl)tri-methoxysilan und/oder (3-Acryloxypropyl)tris(trimethylsiloxy)silan, Methacryloxysilane, wie insbesondere (3-Methacryloxypropyl)trimethoxysilan, (3-Methacryloxypropyl)methyldimethoxysilan, (3-Methacryloxypropyl)dimethylmethoxysilan, (3-Methacryloxypropyl)triethoxysilan (Methacryloxymethyl)methyldiethoxysilan und/oder (3-Methacryloxypropyl)methyldiethyloxysilan. Erfindungsgemäß besonders vorteilhaft werden Acryloxysilane und/oder Methacryloxysilane, insbesondere Methacryloxysilane, wie bevorzugt (3-Methacryloxypropyl)trimethoxysilan, (3-Methacryloxypropyl)methyldimethoxysilan, (3-Methacryloxypropyl)dimethylmethoxysilan, (3-Methacryloxypropyl)triethoxysilan, (Methacryloxymethyl)methyldiethoxysilan und/oder (3-Methacryloxypropyl)methyldiethoxysilan. Die Menge an Silanmonomere beträgt ≥ 0,01 und ≤ 10 Gew.-%, vorteilhaft ≥ 0,1 und ≤ 5 Gew.-% und insbesondere vorteilhaft ≥ 0,1 und ≤ 2 Gew.-%, jeweils bezogen auf die Gesamtmonomerenmenge.

Daneben können als Monomere zusätzlich solche ethylenisch ungesättigten Monomere X (≙ Monomere A in der WO 03000760), die entweder wenigstens eine Säuregruppe und/oder deren entsprechendes Anion oder solche ethylenisch ungesättigten Monomere Y (≙ Monomere B in der WO 03000760), die wenigstens eine Amino-, Amido-, Ureido- oder N-heterocyclische Gruppe und/oder deren am Stickstoff protonierten oder alkylierten Ammoniumderivate enthalten, eingesetzt werden. Bezogen auf die Gesamtmonomerenmenge, beträgt die Menge an Monomeren X bzw. Monomeren Y bis zu 10 Gew.-%, oft 0,1 bis 7 Gew.-% und häufig 0,2 bis 5 Gew.-%.

Als Monomere X werden ethylenisch ungesättigte Monomere mit wenigstens einer Säuregruppe eingesetzt. Dabei kann die Säuregruppe beispielsweise eine Carbonsäure-, Sulfonsäure-, Schwefelsäure-, Phosphorsäure- und/oder Phosphonsäuregruppe sein. Beispiele für Monomere X sind Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure sowie Phosphorsäuremonoester von n-Hydroxyalkylacrylaten und n-Hydroxyalkylmethacrylaten, wie beispielsweise Phosphorsäuremonoester von Hydroxyethylacrylat, n-Hydroxypropylacrylat, n-Hydroxybutylacrylat und Hydroxyethylmethacrylat, n-Hydroxypropylmethacrylat oder n-Hydroxybutylmethacrylat. Erfindungsgemäß lassen sich aber auch die Ammonium- und Alkalimetallsalze der vorgenannten wengistens eine Säuregruppe aufweisenden ethylenisch ungesättigten Monomeren einsetzen. Als Alkalimetall insbesondere bevorzugt ist Natrium und Kalium. Beispiele hierfür sind die Ammonium-, Natrium- und Kaliumsalze der Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure sowie die Mono- und Di-Ammonium-, -Natrium- und -Kaliumsalze der Phosphorsäuremonoester von Hydroxyethylacrylat, n-Hydroxypropylacrylat, n-Hydroxybutylacrylat und Hydroxyethylmethacrylat, n-Hydroxypropylmethacrylat oder n-Hydroxybutylmethacrylat.

Bevorzugt werden Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure eingesetzt.

Als Monomere Y werden ethylenisch ungesättigte Monomere verwendet, die wenigstens eine Amino-, Amido-, Ureido- oder N-heterocyclische Gruppe und/oder deren am Stickstoff protonierten oder alkylierten Ammoniumderivate enthalten.

Beispiele für Monomere Y, die wenigstens eine Aminogruppe enthalten sind 2-Aminoethylacrylat, 2-Aminoethylmethacrylat, 3-Aminopropylacrylat, 3-Aminopropylmethacrylat, 4-Amino-n-butylacrylat, 4-Amino-n-butylmethacrylat, 2-(N-Methylamino)ethylacrylat, 2-(N-Methylamino)-ethylmethacrylat, 2-(N-Ethylamino)ethylacrylat, 2-(N-Ethylamino)ethylmethacrylat, 2-(N-n-Propylamino)ethylacrylat, 2-(N-n-Propylamino)ethylmethacrylat, 2-(N-iso-Propylamino)ethylacrylat, 2-(N-iso-Propylamino)ethylmethacrylat, 2-(N-tert.-Butylamino)ethylacrylat, 2-(N-tert.-Butyl-amino)ethylmethacrylat (beispielsweise kommerziell verfügbar als Norsocryl^{®} TBAEMA der Fa. Arkema Inc.), 2-(N,N-Dimethylamino)ethylacrylat (beispielsweise kommerziell verfügbar als Norsocryl^{®} ADAME der Fa. Arkema Inc.), 2-(N,N-Dimethylamino)ethylmethacrylat (beispielsweise kommerziell verfügbar als Norsocryl^{®} MADAME der Fa. Arkema Inc.), 2-(N,N-Diethylamino)-ethylacrylat, 2-(N,N-Diethylamino)ethylmethacrylat, 2-(N,N-Di-n-propylamino)ethylacrylat, 2-(N,N-Di-n-propylamino)ethylmethacrylat, 2-(N,N-Di-iso-propylamino)ethylacrylat, 2-(N,N-Di-iso-propylamino)ethylmethacrylat, 3-(N-Methylamino)propylacrylat, 3-(N-Methylamino)propylmethacrylat, 3-(N-Ethylamino)propylacrylat, 3-(N-Ethylamino)propylmethacrylat, 3-(N-n-Propylamino)propylacrylat, 3-(N-n-Propylamino)propylmethacrylat, 3-(N-iso-Propylamino)propylacrylat, 3-(N-iso-Propylamino)propylmethacrylat, 3-(N-tert.-Butylamino)propylacrylat, 3-(N-tert.-Butylamino)propylmethacrylat, 3-(N,N-Dimethylamino)propylacrylat, 3-(N,N-Dimethylamino)propylmethacrylat, 3-(N,N-Diethylamino)propylacrylat, 3-(N,N-Diethyl-amino)propylmethacrylat, 3-(N,N-Di-n-propylamino)propylacrylat, 3-(N,N-Di-n-propylamino)propylmethacrylat, 3-(N,N-Di-iso-propylamino)propylacrylat und 3-(N,N-Di-iso-propylamino)propylmethacrylat.

Beispiele für Monomere Y, die wenigstens eine Amidogruppe enthalten sind Acrylamid, Methacrylamid, N-Methylacrylamid, N-Methylmethacrylamid, N-Ethylacrylamid, N-Ethylmethacrylamid, N-n-Propylacrylamid, N-n-Propylmethacrylamid, N-iso-Propylacrylamid, N-iso-Propylmethacrylamid, N-tert.-Butylacrylamid, N-tert.-Butylmethacrylamid, N,N-Dimethylacrylamid, N,N-Dimethyl-methacrylamid, N,N-Diethylacrylamid, N,N-Diethylmethacrylamid, N,N-Di-n-propylacrylamid, N,N-Di-n-propylmethacrylamid, N,N-Di-iso-propylacrylamid, N,N-Di-iso-propylmethacrylamid, N,N-Di-n-butylacrylamid, N,N-Di-n-butylmethacrylamid, N-(3-N',N'-Dimethylaminopropyl)methacrylamid, Diacetonacrylamid, N,N'-Methylenbisacrylamid, N-(Diphenylmethyl)acrylamid, N-Cyclohexylacrylamid, aber auch N-Vinylpyrrolidon und N-Vinylcaprolactam.
Beispiele für Monomere Y, die wenigstens eine Ureidogruppe enthalten sind N,N'-Divinylethy-lenharnstoff und 2-(1-Imidazolin-2-onyl)ethylmethacrylat (beispielsweise kommerziell verfügbar als Norsocryl^{®} 100 der Fa. Arkema Inc.).
Beispiele für Monomere Y, die wenigstens eine N-heterocyclische Gruppe enthalten sind 2-Vinylpyridin, 4-Vinylpyridin, 1-Vinylimidazol, 2-Vinylimidazol und N-Vinylcarbazol.

Bevorzugt werden folgende Verbindungen eingesetzt: 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)-ethylmethacrylat, N-(3-N',N'-Dimethylaminopropyl)methacrylamid und 2-(1-Imidazolin-2-onyl)-ethylmethacrylat.

Abhängig vom pH-Wert des wässrigen Reaktionsmediums kann ein Teil oder die Gesamtmenge der vorgenannten stickstoffhaltigen Monomere Y in der am Stickstoff protonierten quartären Ammoniumform vorliegen.

Als Monomere Y, welche am Stickstoff eine quartäre Alkylammoniumstruktur aufweisen, seien beispielhaft genannt 2-(N,N,N-Trimethylammonium)ethylacrylatchlorid (beispielsweise kommerziell verfügbar als Norsocryl^{®} ADAMQUAT MC 80 der Fa. Arkema Inc.), 2-(N,N,N-Trimethylammonium)ethylmethacrylatchlorid (beispielsweise kommerziell verfügbar als Norsocryl^{®} MADQUAT MC 75 der Fa. Arkema Inc.), 2-(N-Methyl-N,N-diethylammonium)ethylacrylatchlorid, 2-(N-Methyl-N,N-diethylammonium)ethylmethacrylatchlorid, 2-(N-Methyl-N,N-dipropylammonium)ethylacrylatchlorid, 2-(N-Methyl-N,N-dipropylammonium)ethylmethacrylat, 2-(N-Benzyl-N,N-dimethylammonium)ethylacrylatchlorid (beispielsweise kommerziell verfügbar als Norsocryl^{®} ADAMQUAT BZ 80 der Fa. Arkema Inc.), 2-(N-Benzyl-N,N-dimethylammonium)ethyl-methacrylatchlorid (beispielsweise kommerziell verfügbar als Norsocryl^{®} MADQUAT BZ 75 der Fa. Arkema Inc.), 2-(N-Benzyl-N,N-diethylammonium)ethylacrylatchlorid, 2-(N-Benzyl-N,N-diethylammonium)ethylmethacrylatchlorid, 2-(N-Benzyl-N,N-dipropylammonium)ethyl-acrylatchlorid, 2-(N-Benzyl-N,N-dipropylammonium)ethylmethacrylatchlorid, 3-(N,N,N-Trimethylammonium)propylacrylatchlorid, 3-(N,N,N-Trimethylammonium)propylmethacrylatchlorid, 3-(N-Methyl-N,N-diethylammonium)propylacrylatchlorid, 3-(N-Methyl-N,N-diethylammonium)propylmethacrylatchlorid, 3-(N-Methyl-N,N-dipropylammonium)propylacrylatchlorid, 3-(N-MethylN,N-dipropylammonium)propylmethacrylatchlorid, 3-(N-Benzyl-N,N-dimethylammonium)propylacrylatchlorid, 3-(N-Benzyl-N,N-dimethylammonium)propylmethacrylatchlorid, 3-(N-Benzyl-N,N-diethylammonium)propylacrylatchlorid, 3-(N-Benzyl-N,N-diethylammonium)propylmethacrylat-chlorid, 3-(N-Benzyl-N,N-dipropylammonium)propylacrylatchlorid und 3-(N-Benzyl-N,N-dipropylammonium)propylmethacrylatchlorid. Selbstverständlich können an Stelle der genannten Chloride auch die entsprechenden Bromide und Sulfate eingesetzt werden.

Bevorzugt werden 2-(N,N,N-Trimethylammonium)ethylacrylatchlorid, 2-(N,N,N-Trimethylammonium)ethylmethacrylatchlorid, 2-(N-Benzyl-N,N-dimethylammonium)ethylacrylatchlorid und 2-(N-Benzyl-N,N-dimethylammonium)ethylmethacrylatchlorid verwendet.
Selbstverständlich können auch Gemische der vorgenannten ethylenisch ungesättigten Monomere eingesetzt werden.

Zur Auslösung der radikalischen Polymerisation kommen alle diejenigen radikalischen Polymerisationsinitiatoren (Radikalinitiatoren) in Betracht, die in der Lage sind, eine radikalische wässrige Emulsionspolymerisation auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Menthyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. Werden erfindungsgemäß Redoxinitiatorsysteme eingesetzt, so werden häufig die Oxidationsmittel und die Reduktionsmittel parallel zudosiert oder bevorzugt die Gesamtmenge des entsprechenden Oxidationsmittels vorgelegt und lediglich das Reduktionsmittel zudosiert. Die Gesamtmenge an Radikalinitiator wird bei Redoxinitiatorsystemen aus den Gesamtmengen an Oxidations- und Reduktionsmitteln gebildet. Als Radikalinitiatoren bevorzugt werden jedoch anorganische und organische Peroxide und insbesondere anorganische Peroxide, häufig in Form wässriger Lösungen eingesetzt. Insbesondere als Radikalinitiator bevorzugt sind Natriumperoxodisulfat, Kaliumperoxodisulfat, Ammoniumperoxodisulfat, Wasserstoffperoxid und/oder tert.-Butylhydroperoxid.

Gemäß der nicht vorveröffentlichten Patentanmeldung PCT/EP2010/054332, basierend auf der prioritätsbegründenden europäischen Patentanmeldung Nr. 09157984.7, beträgt die Menge an insgesamt eingesetzten Radikalinitiator 0,05 bis 2 Gew.-%, vorteilhaft 0,1 bis 1,5 Gew.-% und insbesondere vorteilhaft 0,3 bis 1,0 Gew.%, jeweils bezogen auf die Gesamtmonomerenmenge.

Nach den anderen Herstellverfahren kann die Menge an Radikalinitiator bis zu 5 Gew.-%, bezogen auf die Gesamtmonomerenmenge, betragen.

Erfindungswesentlich ist, dass der wässrigen Feststoffdispersion gemäß der Lehre der nicht vorveröffentlichten Patentanmeldung PCT/EP2010/054332, basierend auf der prioritätsbegründenden europäischen Patentanmeldung Nr. 09157984.7, in Verfahrensstufe c) insgesamt ≥ 0,01 und ≤ 20 Gew.-% der Gesamtmonomerenmenge und ≥ 60 Gew.-%, bevorzugt ≥ 70 Gew.-% sowie ≤ 90 Gew.-% oder ≤ 100 Gew.-% und insbesondere bevorzugt ≥ 75 und ≤ 85 Gew.-% der Gesamtmenge an radikalischem Polymerisationsinitiator zudosiert und die zudosierten ethylenisch ungesättigten Monomeren unter Polymerisationsbedingungen bis zu einem Monomerenumsatz ≥ 80 Gew.-%, bevorzugt ≥ 85 Gew.-% insbesondere bevorzugt ≥ 90 Gew.-% polymerisiert werden.

Dabei kann die Zugabe des Radikalinitiators zum wässrigen Polymerisationsmedium in Verfahrensstufe c) der nicht vorveröffentlichten Patentanmeldung PCT/EP2010/054332, basierend auf der prioritätsbegründenden europäischen Patentanmeldung Nr. 09157984.7, unter Polymerisationsbedingungen erfolgen. Es ist aber auch möglich, dass eine Teil- oder die Gesamtmenge des Radikalinitiators dem die vorgelegten Monomeren enthaltenden wässrigen Polymerisationsmedium unter Bedingungen, welche nicht geeignet sind eine Polymerisationsreaktion auszulösen, beispielsweise bei tiefer Temperatur, zugegeben wird und danach im wässrigen Polymerisationsgemisch Polymerisationsbedingungen eingestellt werden.

In Verfahrensstufe c) kann die Zugabe des Radikalinitiators oder dessen Komponenten diskontinuierlich in einer oder mehreren Portionen oder kontinuierlich mit gleichbleibenden oder sich ändernden Mengenströmen erfolgen.

Die Bestimmung des Monomerenumsatzes ist dem Fachmann prinzipiell geläufig und erfolgt beispielsweise durch reaktionskalorimetrische Bestimmung.

Nachdem in Verfahrensschritt c) der nicht vorveröffentlichten Patentanmeldung PCT/EP2010/054332, basierend auf der prioritätsbegründenden europäischen Patentanmeldung Nr. 09157984.7, die Menge der eingesetzten Monomeren bis zu einem Umsatz ≥ 80 Gew.-% polymerisiert wurden (Polymerisationsstufe 1), werden im nachfolgenden Verfahrensschritt d) die gegebenenfalls verbliebene Restmenge, d.h. ≤ 90, ≤ 80, ≤ 70, ≤ 60 Gew.-% und vorteilhaft ≤ 50, ≤ 40, ≤ 30, ≤ 20 Gew.-% oder ≤ 10 Gew.-% des anorganischen Feststoffs die gegebenenfalls verbliebene Restmenge, d.h. ≤ 40, ≤ 30 oder bevorzugt ≥ 15 und ≤ 25 Gew.-% des radikalischen Polymerisationsinitiators und die verbliebene Restmenge, d.h. ≥ 80 und ≤ 99,99 Gew.-%, bevorzugt ≥ 85 und ≤ 99 Gew.-% und insbesondere bevorzugt ≥ 85 und ≤ 95 Gew.-% der ethylenisch ungesättigten Monomeren unter Polymerisationsbedingungen zudosiert und bis zu einem Monomerenumsatz ≥ 90 Gew.-% polymerisiert (Polymerisationsstufe 2). Dabei kann in den Verfahrensschritten c) und d) die Zudosierung der jeweiligen Komponenten als separate Einzelströme oder im Gemisch diskontinuierlich in einer oder mehreren Portionen oder kontinuierlich mit gleichbleibenden oder sich ändernden Mengenströmen zudosiert werden. Selbstverständlich ist es auch möglich, dass sich die Radikalinitiatoren oder ethylenisch ungesättigten Monomeren in den Verfahrensschritten c) und d) unterscheiden. Unter Polymerisationsbedingungen sind im Rahmen dieser Schrift dabei generell diejenigen Temperaturen und Drücke zu verstehen, unter denen die radikalisch initiierte wässrige Emulsionspolymerisation mit ausreichender Polymerisationsgeschwindigkeit verläuft. Sie sind insbesondere abhängig vom verwendeten Radikalinitiator. Vorteilhaft werden Art und Menge des Radikalinitiators, die Polymerisationstemperatur und der Polymerisationsdruck in den Verfahrensschritten c) und d) so ausgewählt, dass der eingesetzte Radikalinitiator eine ausreichende Halbwertszeit aufweist und dabei immer genügend Startradikale zur Verfügung stehen, um die Polymerisationsreaktion auszulösen bzw. aufrechtzuerhalten.

Als Reaktionstemperatur für die radikalische wässrige Polymerisationsreaktion in Anwesenheit des feinteiligen anorganischen Feststoffes kommt generell der gesamte Bereich von 0 bis 170 °C in Betracht. Dabei werden in der Regel Temperaturen ≥ 50 und ≤ 120 °C, häufig ≥ 60 und ≤ 110 °C und oft ≥ 70 und ≤ 100 °C angewendet. Die radikalische wässrige Emulsionspolymerisation kann bei einem Druck kleiner, gleich oder größer 1 atm (absolut) durchgeführt werden, wobei die Polymerisationstemperatur 100 °C übersteigen und bis zu 170 °C betragen kann. Vorzugsweise werden leichtflüchtige Monomere wie Ethylen, Butadien oder Vinylchlorid unter erhöhtem Druck polymerisiert. Dabei kann der Druck 1,2, 1,5, 2, 5, 10, 15 bar oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die radikalische wässrige Polymerisation bei 1 atm (absolut) unter Inertgasatmosphäre, wie beispielsweise unter Stickstoff oder Argon durchgeführt.

Das wässrige Reaktionsmedium kann prinzipiell in untergeordnetem Maße (in der Regel ≤ 5 Gew.-%, oft ≤ 3 Gew.-% und häufig ≤ 1 Gew.-%) auch wasserlösliche organische Lösungsmittel, wie beispielsweise Methanol, Ethanol, Isopropanol, Butanole, Pentanole, aber auch Aceton etc. umfassen. Bevorzugt erfolgt die Polymerisationsreaktion jedoch in Abwesenheit solcher Lösungsmittel.

Neben den vorgenannten Komponenten können in den Verfahren zur Herstellung der wässrigen Kompositpartikel-Dispersion optional auch radikalkettenübertragende Verbindungen eingesetzt werden, um das Molekulargewicht der durch die Polymerisation zugänglichen Polymerisate zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd editition, 1989, J. Brandrup und E.H. Immergut, John Wiley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen. Die optional eingesetzte Gesamtmenge der radikalkettenübertragenden Verbindungen, bezogen auf die Gesamtmenge der zu polymerisierenden Monomeren, ist in der Regel ≤ 5 Gew.-%, oft ≤ 3 Gew.-% und häufig ≤ 1 Gew.-%.

Die erfindungsgemäß eingesetzten wässrigen Kompositpartikel-Dispersionen weisen üblicherweise einen Gesamtfeststoffgehalt von 1 bis 70 Gew.-%, häufig von 5 bis 65 Gew.-% und oft von 10 bis 60 Gew.-% auf.

Die erfindungsgemäß in Form einer wässrigen Dispersion eingesetzten Kompositpartikel besitzen in der Regel mittlere Teilchendurchmesser von > 10 und ≤ 1000 nm, häufig ≥ 50 und ≤ 500 nm sowie oft ≥ 100 und ≤ 250 nm. Die Bestimmung der mittleren Teilchengröße der Kompositpartikel erfolgt nach der Methode der quasielastischen Lichtstreuung (DIN-ISO 13321).

Die erfindungsgemäß einsetzbaren Kompositpartikel können unterschiedliche Strukturen aufweisen. Dabei können die Kompositpartikel ein oder mehrere der feinteiligen Feststoffteilchen enthalten. Die feinteiligen Feststoffteilchen können vollständig von der Polymermatrix umhüllt sein. Es ist aber auch möglich, dass ein Teil der feinteiligen Feststoffteilchen von der Polymermatrix umhüllt ist, während ein anderer Teil auf der Oberfläche der Polymermatrix angeordnet ist. Selbstverständlich ist es auch möglich, dass ein Großteil der feinteiligen Feststoffpartikel auf der Oberfläche der Polymermatrix gebunden ist.

Häufig werden insbesondere solche Kompositpartikel-Dispersionen eingesetzt, deren Kompositpartikel aus Polymerisaten aufgebaut sind, welche verfilmbar sind und deren Mindestfilmbildetemperatur ≤ 150 °C bevorzugt ≤ 100 °C und besonders bevorzugt ≤ 50 °C ist. Da die Mindestfilmbildetemperatur unterhalb 0 °C nicht mehr messbar ist, kann die untere Grenze der Mindestfilmbildetemperatur nur durch die Glasübergangstemperatur angegeben werden. Häufig beträgt die Mindestfilmbildetemperatur bzw. die Glasübergangstemperatur ≥ -50 °C oder ≥-30°C und oft ≥ -10°C. Vorteilhaft liegt die Mindestfilmbildetemperatur bzw. die Glasübergangstemperatur im Bereich ≥ -40 °C und ≤ 100 °C, bevorzugt im Bereich ≥ -30 °C und ≤ 50 °C und besonders bevorzugt im Bereich ≥ -30 °C und ≤ 20 °C. Die Bestimmung der Mindestfilmbildetemperatur erfolgt nach DIN 53 787 bzw. ISO 2115 und die Bestimmung der Glasübergangstemperatur nach DIN 53 765 (Differential Scanning Calorimetry, 20 K/min, midpoint-Messung).

Die durch das erfindungsgemäße Verfahren zugänglichen wässrigen Kompositpartikel-Dispersionen weisen gegenüber den wässrigen Kompositpartikel-Dispersionen, welchen keine Silanverbindungen I enthalten, eine deutlich höhere Lagerstabilität auf.

Die erfindungsgemäßen Kompositpartikel-Dispersionen eignen sich insbesondere zur Herstellung von wässrigen Formulierungen, sowie als Rohstoffe zur Herstellung von Klebstoffen, wie beispielsweise Haftklebstoffen, Bauklebstoffen oder Industrieklebstoffen, Bindemitteln, wie beispielsweise für die Papierstreicherei, Dispersionsfarben oder für Druckfarben und Drucklacke zum Bedrucken von Kunststofffolien, zur Herstellung von Vliesstoffen sowie zur Herstellung von Schutzschichten und Wasserdampfsperren, wie beispielsweise bei der Grundierung. Ferner lassen sich die dem erfindungsgemäßen Verfahren zugänglichen Kompositpartikel-Dispersionen auch zur Modifizierung von Zement- und Mörtelformulierungen nutzen. Die nach dem erfindungsgemäßen Verfahren zugänglichen wässrigen Kompositpartikel-Dispersionen lassen sich prinzipiell auch in der medizinischen Diagnostik sowie in anderen medizinischen Anwendungen einsetzen (vgl. z.B. K. Mosbach und L. Andersson, Nature, 1977, 270, Seiten 259 bis 261; P.L. Kronick, Science 1978, 200, Seiten 1074 bis 1076; US-A4,157,323). Mit Vorteil eignen sich die erfindungsgemäßen Kompositpartikel-Dispersionen zur Herstellung wässriger Beschichtungsmassen, wie beispielsweise Dispersionsfarben, Lackfarben oder Grundierungen.

Von Bedeutung dabei ist, dass auch die wässrigen Formulierungen, welche neben einer wässrigen Kompositpartikel-Dispersion sowie wenigstens einer Silanverbindung I noch weitere Formulierungsbestandteile, wie beispielsweise Dispergiermittel, Biozide, Verdickungsmittel, Entschäumer, Pigmente und/oder Füllstoffe enthalten, eine deutlich erhöhte Lagerstabilität aufweisen und so auch nach längerer Zeit sicher verarbeitet werden können, weswegen eine Silanverbindung I auch zur Verbesserung der Lagerstabilität einer, eine wässrige Kompositpartikel-Dispersion enthaltenden wässrigen Formulierung verwendet werden kann.

Dementsprechend ist eine vorteilhafte Ausführungsform dieser Erfindung auch ein Verfahren zur Verbesserung der Lagerstabilität einer wässrigen Formulierung, welche eine wässrige Kompositpartikel-Dispersion enthält, welches dadurch gekennzeichnet ist, dass dem wässrigen Formulierungsmedium vor, während oder nach der Zugabe der wässrigen Kompositpartikel-Dispersion eine Silanverbindung I zugesetzt wird. Dabei soll im Rahmen dieser Schrift "vor der Zugabe der wässrigen Kompositpartikel-Dispersion" jeder beliebige Zeitpunkt vor der Zugabe der wässrigen Kompositpartikel-Dispersion in eine Mischvorrichtung, "während der Zugabe der wässrigen Kompositpartikel-Dispersion" jeder beliebige Zeitpunkt während der Zugabe der wässrigen Kompositpartikel-Dispersion in eine Mischvorrichtung und "nach der Zugabe der wässrigen Kompositpartikel-Dispersion" jeder beliebige Zeitpunkt nach der Zugabe der wässrigen Kompositpartikel-Dispersion in eine Mischvorrichtung, in welcher die wässrige Formulierung hergestellt wird, bedeuten.

### Beispiele

### I. Herstellung von Kompositpartikel-Dispersionen

### a) Herstellung einer wässrigen Kompositpartikel-Dispersion A

In einen 2 I-Vierhalskolben, ausgerüstet mit einem Rückflusskühler, einem Thermometer, einem mechanischen Rührer sowie einer Dosiervorrichtung, wurden bei 20 bis 25 °C (Raumtemperatur) und Atmosphärendruck (1 atm ≙ 1,013 bar absolut) unter Stickstoffatmosphäre und Rühren (200 Umdrehungen pro Minute) 416,6 g Nalco^{®} 1144 (40 gew.-% kolloidales Siliziumdioxid mit einem mittleren Teilchendurchmesser von 14 nm; Marke der Firma Nalco Chemical Company), daran anschließend 10,8 g einer 20 gew.-%igen wässrigen Lösung eines C₁₆C₁₈-Fettalkoholethoxylats mit durchschnittlich 18 Ethylenoxid-Einheiten (Lutensol^{®} AT18; Marke der Firma BASF SE) und daran anschließend 315,0 g entionisiertes Wasser innerhalb von 5 Minuten zugegeben. Anschließend wurde das Vorlagengemisch auf 70 °C aufgeheizt.

Parallel stellte man als Zulauf 1 eine Monomerenmischung, bestehend aus 12,6 g Methylmethacrylat und 18,8 g n-Butylacrylat, als Zulauf 2 2,9 g (3-Methacryloxypropyl)trimethoxysilan, als Zulauf 3 eine Initiatorlösung, bestehend aus 2,1 g Natriumperoxodisulfat, 5,4 g einer 10 gew.-%igen wässrigen Lösung von Natriumhydroxid und 193,0 g entionisiertem Wasser sowie als Zulauf 4 eine Monomermischung bestehend aus 87,3 g Methylmethacrylat,
130,9 g n-Butyl-acrylat und 2,5 g Hydroxyethylmethacrylat, her.

Anschließend wurden dem gerührten Vorlagengemisch bei 70 °C innerhalb von 90 Minuten über eine separate Zulaufleitung 0,9 g von Zulauf 2 kontinuierlich mit gleichbleibendem Mengenstrom zugegeben. Dabei heizte man das Reaktionsgemisch 45 Minuten nach Beginn des Zulaufs 2 auf eine Reaktionstemperatur von 85 °C auf. Eine Stunde nach Beginn des Zulaufs 2 wurden dem Reaktionsgemisch innerhalb einer Zeitspanne von 120 Minuten über zwei separate Zulaufleitungen gleichzeitig beginnend, die Gesamtmenge von Zulauf 1 und 158,8 g von Zulauf 3 mit kontinuierlich gleichbleibenden Mengenströmen zudosiert. Daran anschließend wurden dem Reaktionsgemisch innerhalb einer Zeitspanne von 120 Minuten über separate Zulaufleitungen gleichzeitig beginnend, die Gesamtmenge von Zulauf 4 und die verbliebene Restmenge von Zulauf 2 sowie innerhalb einer Zeitspanne von 135 Minuten die verbliebene Restmenge von Zulauf 3 mit kontinuierlich gleichbleibenden Mengenströmen zudosiert. Anschließend wurde die erhaltene wässrige Kompositpartikel-Dispersion eine weitere Stunde bei Reaktionstemperatur gerührt und danach auf Raumtemperatur abgekühlt.

Die so erhaltene wässrige Kompositpartikel-Dispersion war transluzent, niedrigviskos und wies einen Feststoffgehalt von 35,5 Gew-% und einen Koagulatgehalt < 0,05 Gew.-% auf, jeweils bezogen auf das Gesamtgewicht der wässrigen Kompositpartikel-Dispersion. Der pH-Wert der Kompositpartikel-Dispersion betrug 9,1. Die mittlere Teilchendurchmesser der Kompositpartikel wurde zu 117 nm bestimmt.
Nach der Methode der Analytischen Ultrazentrifunge (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Reslution Particle Size Distribution and Density Gradient Techniques, W. Mächtle, Seiten 147 bis 175) konnten keine freien Siliziumdioxid-Teilchen nachgewiesen werden.
Der Feststoffgehalt wurde generell bestimmt, indem ca. 1 g der Kompositpartikel-Dispersion in einem offenen Aluminiumtigel mit einem Innendurchmesser von ca. 3 cm in einem Trockenschrank bei 150 °C bis zur Gewichtskonstanz getrocknet wurde. Zur Bestimmung des Feststoffgehalts wurden jeweils zwei separate Messungen durchgeführt und der entsprechende Mittelwert gebildet.

Zur Bestimmung des Koagulatgehaltes wurden generell bei Raumtemperatur ca. 300 g der wässrigen Kompositpartikel-Dispersion über ein 45 µm-Nylonsieb filtriert, welches vor der Filtration gewogen wurde. Nach der Filtration spülte man das Sieb mit wenig entionisiertem Wasser (ca. 50 ml) und trocknete es dann im Trockenschrank bei 100 °C und Atmosphärendruck bis zur Gewichtskonstanz (ca. 1 Stunde). Nach dem Abkühlen auf Raumtemperatur wurde das Sieb erneut gewogen. Der Gehalt an Koagulat ergab sich als Differenz der beiden Wägungen, jeweils bezogen auf die zur Filtration eingesetzte Menge an wässriger Kompositpartikel-Dispersion. Es wurden jeweils zwei Bestimmungen des Koagulatgehaltes durchgeführt. Die in den jeweiligen Beispielen angegebenen Werte entsprechen den Mittelwerten dieser beiden Bestimmungen.

Die Bestimmung der mittleren Teilchendurchmesser der Kompositpartikel erfolgte generell nach der Methode der quasielastischen Lichtstreuung (DIN-ISO 13321) mit einem High Performance Particle Sizer (HPPS) der Fa. Malvern Instruments Ltd..

Der pH-Wert wurde generell mittels eines Micropal pH538-Gerätes der Fa. Wissenschaftlich-Technische-Werkstätten (WTW) GmbH bei Raumtemperatur bestimmt.

### b) Herstellung einer wässrigen Kompositpartikel-Dispersion B

In einen 1 I-Vierhalskolben, ausgerüstet mit einem Rückflusskühler, einem Thermometer, einem mechanischen Rührer sowie einer Dosiervorrichtung, wurden bei Raumtemperatur und Atmosphärendruck unter Stickstoffatmosphäre und Rühren (200 Umdrehungen pro Minute) 271,5 g Nyacol^{®} SN15 (15 gew.-% kolloidales Zinndioxid mit einem mittleren Teilchendurchmesser von 10 bis 15 nm; Marke der Fa. Nyacol NanoTechnologies Inc.), daran anschließend 3,9 g einer 20 gew.-%igen wässrigen Lösung eines C₁₆C₁₈-Fettalkoholethoxylats mit durchschnittlich 18 Ethylenoxid-Einheiten (Lutensol^{®} AT18) und daran anschließend 132,6 g entionisiertes Wasser innerhalb von 5 Minuten zugegeben. Anschließend wurde das Vorlagengemisch auf 70 °C aufgeheizt.

Parallel stellte man als Zulauf 1 eine Monomerenmischung, bestehend aus 5,9 g Methylmethacrylat und 8,8 g n-Butylacrylat, als Zulauf 2 1,4 g (3-Methacryloxypropyl)trimethoxysilan, als Zulauf 3 eine Initiatorlösung, bestehend aus 1,0 g Natriumperoxodisulfat, 2,5 g einer 10 gew.-%igen wässrigen Lösung von Natriumhydroxid und 90,8 g entionisiertem Wasser sowie als Zulauf 4 eine Monomermischung bestehend aus 41,1 g Methylmethacrylat, 61,6 g n-Butylacrylat und 1,2 g Hydroxyethylmethacrylat, her.

Anschließend wurden dem gerührten Vorlagengemisch bei 70 °C innerhalb von 90 Minuten über eine separate Zulaufleitung 0,4 g von Zulauf 2 kontinuierlich mit gleichbleibendem Mengenstrom zugegeben. Dabei heizte man das Reaktionsgemisch 45 Minuten nach Beginn des Zulaufs 2 auf eine Reaktionstemperatur von 85 °C auf. Eine Stunde nach Beginn des Zulaufs 2 wurden dem Reaktionsgemisch innerhalb einer Zeitspanne von 120 Minuten über zwei separate Zulaufleitungen gleichzeitig beginnend, die Gesamtmenge von Zulauf 1 und 74,7 g von Zulauf 3 mit kontinuierlich gleichbleibenden Mengenströmen zudosiert. Daran anschließend wurden dem Reaktionsgemisch innerhalb einer Zeitspanne von 120 Minuten über separate Zulaufleitungen gleichzeitig beginnend, die Gesamtmenge von Zulauf 4 und die verbliebene Restmenge von Zulauf 2 sowie innerhalb einer Zeitspanne von 135 Minuten die verbliebene Restmenge von Zulauf 3 mit kontinuierlich gleichbleibenden Mengenströmen zudosiert. Anschließend wurde die erhaltene wässrige Kompositpartikel-Dispersion eine weitere Stunde bei Reaktionstemperatur gerührt und danach auf Raumtemperatur abgekühlt.

Die so erhaltene wässrige Kompositpartikel-Dispersion war transluzent, niedrigviskos und wies einen Feststoffgehalt von 20,1 Gew-% und einen Koagulatgehalt < 0,05 Gew.-% auf, jeweils bezogen auf das Gesamtgewicht der wässrigen Kompositpartikel-Dispersion. Der pH-Wert der Kompositpartikel-Dispersion betrug 8,7. Die mittlere Teilchendurchmesser der Kompositpartikel wurde zu 89 nm bestimmt.

### II. Lagerstabilität der wässrigen Kompositpartikel-Dispersionen

Zur Überprüfung der Lagerstabilität wurden die vorgenannten Kompositpartikel-Dispersionen A und B mit entionisiertem Wasser auf einen Feststoffgehalt von 20 Gew.-% verdünnt. Von den so erhaltenen Kompositpartikel-Dispersionen A und B wurden jeweils 100 g mit 0,12 g, mit 0,24 g, mit 0,48 g und 1,00 g einer 50 gew.-%igen wässrigen Lösung von (3-Glycidyloxypropyl)trimethoxysilan versetzt, homogen gemischt, anschließend in geschlossenen 100 ml-Probenfläschchen bei 70 °C gelagert und täglich visuell auf Gelierung (≙ starker Viskositätsanstieg, "honigartig zäh") geprüft. In Tabelle 1 sind die für die unterschiedlichen Mengen an (3-Glycidyloxypropyl)trimethoxysilan erhaltenen Gelierungszeiten in Tagen aufgelistet. Nach 60 Tagen wurden die Versuche abgebrochen.

**Tabelle 1: Gelierzeiten von mit (3-Glycidyloxypropyl)trimethoxysilan stabilisierten wässrigen Kompositpartikel-Dispersionen in Tagen**

| (3-Glycidyloxypropyl)-trimethoxysilan¹⁾ [in g] | Gelierung in Tagen für Kompositpartikel-Dispersion | |
|---|---|---|
| | A | B |
| - | 39 | 2 |
| 0,12 | >60 | 4 |
| 0,24 | >60 | 5 |
| 0,48 | >60 | 29 |
| 1,00 | >60 | >60 |

| | | |
|---|---|---|
| ¹⁾ Menge der 50 gew.-%igen wässrigen Lösung | | |

### III. Lagerstabilität einer Beschichtungsmasse mit Kompositpartikel-Dispersion A als Bindemittel

Aus den in nachfolgender Tabelle angegeben Bestandteilen (Mengen in g) wurden in der von oben nach unten angegebenen Reihenfolge bei Raumtemperatur unter Rühren mit einem Scheibenrührer bei 1000 Umdrehugnen pro Minute 2 Farbformulierungen basierend auf Kompositpartikel-Dispersion A hergestellt. Dabei wurden in den Farbformulierung A und V eine Kompositpartikel-Dispersion A eingesetzt, welche nach Filtration über ein 45 µm-Nylonsieb erhalten wurde.

| Farbformulierung | V | A |
|---|---|---|
| Kompositpartikel-Dispersion A | 125 | 125 |
| (3-Glycidyloxypropyl)trimethoxysilan¹⁾ | - | 0,54 |
| Verdicker²⁾ | 1,3 | 1,3 |
| Lösungsmittel³⁾ | 4 | 4 |
| Biozid⁴⁾ | 1 | 1 |
| Dispergiermittel⁵⁾ | 5 | 5 |
| Filmbildehilfsmittel⁶⁾ | 10 | 10 |
| Entschäumer⁷⁾ | 1 | 1 |
| Pigment⁸⁾ | 92,5 | 92,5 |
| Füllstoff⁹⁾ | 21,3 | 21,3 |
| Füllstoff¹⁰⁾ | 21,3 | 21,3 |
| Füllstoff¹¹⁾ | 10 | 10 |
| Entschäumer⁷⁾ | 1 | 1 |
| Verdicker¹²⁾ | 2,5 | 2,5 |
| Kompositpartikel-Dispersion A | 157 | 157 |
| (3-Glycidyloxypropyl)trimethoxysilan¹⁾ | - | 0,66 |
| Biozid¹³⁾ | 5 | 5 |

| | | |
|---|---|---|
| ¹⁾ Menge der 50 gew.-%igen wässrigen Lösung ²⁾ Thixol^{®} 53 der Firma Coatex GmbH ³⁾ AMP^{®} 90 der Firma Angus GmbH ⁴⁾ Acticid^{®} MBS der Firma Thor GmbH ⁵⁾ Pigmentverteiler^{®} AB30 der Firma BASF SE ⁶⁾ Dowanol^{®} DPnB der Firma Dow Chemical ⁷⁾ Byk^{®} 022 der Firma Byk Chemie GmbH ⁸⁾ Titandioxid Kronos 2190 der Firma Kronos GmbH ⁹⁾ Minex^{®} 4 der Firma Unimin Corporation ¹⁰⁾ Plastorit^{®} 0 der Firma Rio Tinto AG ¹¹⁾ Optimatt^{®} 2550 der Firma Imerys ¹²⁾ Collacral^{®} LR 8990 der Firma BASF SE ¹³⁾ Acticid^{®} MKA der Firma Thor GmbH | | |

Nach Zugabe der letzten Komponente rührte man noch 15 Minuten weiter und ließ anschließend die Farbformulierungen A und V 1 Stunde ohne Rühren ruhen. Danach wurden die Viskositäten der beiden Farbformulierungen A und V mittels eines ICI Kegel/Platten-Viskosimeters (mit Messkopf C in Anlehnung an ASTM D4287) bestimmt. Die entsprechenden Werte sind in Tabelle 2 angegeben. Daran anschließend wurden die beiden Farbformulierungen A und V in einer verschlossenen 500 ml-Glasflasche insgesamt 49 Tage bei 50 °C gelagert. Nach einer Lagerzeit von 14, 28 und 49 Tagen wurden den Flaschen Proben entnommen und jeweils die Viskositäten der beiden Farbformulierungen wie voran beschrieben bei 23 °C ermittelt. Die dabei erhaltenen Ergebnisse sind in Tabelle 2 aufgelistet.

**Tabelle 2: Viskositäten der Farbformulierungen A und V in Abhängigkeit von der Lagerzeit bei 50 °C**

| | Viskositäten [in Poise] der Farbformulierung | |
|---|---|---|
| Lagerzeit [in Tagen] | V | A |
| -¹⁴⁾ | 1,4 | 1,5 |
| 14 | 1,7 | 1,5 |
| 28 | 2,8 | 1,7 |
| 49 | >5 | 1,9 |

| | | |
|---|---|---|
| ¹⁴⁾ nach Abmischung und 1 Stunde Ruhezeit | | |

Aus den in den Tabellen 1 und 2 aufgeführten Ergebnissen ist klar ersichtlich, dass die mittels einer erfindungsgemäßen Silanverbindung I additivierten Kompositpartikel-Dispersionen A und B sowie einer auf Kompositpartikel-Dispersion A basierenden additivierten Farbformulierung A einen deutlich geringeren Viskositätsanstieg in Abhängigkeit von der Zeit aufweisen als die entsprechenden nichtadditivierten Komposistpartikel-Dispersionen bzw. Farbformulierung.

## Patentansprüche

1. Verfahren zur Verbesserung der Lagerstabilität einer wässrigen Dispersion von Partikeln, welche aus Polymerisat und feinteiligem anorganischem Feststoff aufgebaut sind (Kompositpartikel), **dadurch gekennzeichnet, dass** dem wässrigen Dispergiermedium während oder nach der Herstellung der im wässrigen Medium dispergierten Kompositpartikel (Kompositpartikel-Dispersion) eine organische Silanverbindung I, der allgemeinen Formel 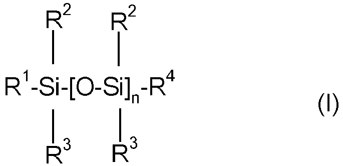 mit
R¹ bis R³:
- C₁-C₁₀-Alkoxy,
- unsubstituiertes oder substituiertes C₁-C₃₀-Alkyl,
- unsubstituiertes oder substituiertes C₅-C₁₅-Cycloalkyl,
- unsubstituiertes oder substituiertes C₆-C₁₀-Aryl,
- unsubstituiertes oder substituiertes C₇-C₁₂-Aralkyl,
R⁴: 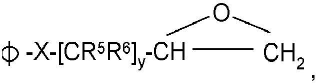
Φ:
- unsubstituiertes oder substituiertes C₁-C₃₀-Alkylen,
- unsubstituiertes oder substituiertes C₅-C₁₅-Cycloalkylen,
- unsubstituiertes oder substituiertes C₆-C₁₀-Arylen,
- unsubstituiertes oder substituiertes C₇-C₁₂-Aralkylen,
X: Sauerstoff, NR⁷ oder CR⁸R⁹
R⁵ bis R⁹: Wasserstoff, C₁-C₄-Alkyl,
n: ganze Zahl von 0 bis 5,
y: ganze Zahl von 0 bis 5,
wobei wenigstens einer der Reste R¹ bis R³ für C₁-C₁₀-Alkoxy steht,
zugesetzt wird.

2. Verfahren nach Anspruch 1, **dadurch gekennzeichnet, dass** die Silanverbindung I dem wässrigen Dispergiermedium der wässrigen Kompositpartikel-Dispersion nach deren Herstellung zugesetzt wird.

3. Verfahren nach einem der Ansprüche 1 und 2, **dadurch gekennzeichnet, dass** die Silanverbindung I enthaltende wässrige Kompositpartikel-Dispersion einen pH-Wert ≥ 7 und ≤ 11 aufweist.

4. Verfahren nach einem der Ansprüche 1 bis 3, **dadurch gekennzeichnet, dass** in der Silanverbindung I R¹ und R² für Methoxy oder Ethoxy, R³ für Methoxy, Ethoxy, Methyl oder Ethyl, Φ für Ethylen, n-Propylen oder n-Butylen, X für Sauerstoff, R⁵ und R⁶ für Wasserstoff und y für die Zahl 1 stehen.

5. Verfahren nach einem der Ansprüche 1 bis 4, **dadurch gekennzeichnet, dass** die Menge der Silanverbindung I 0,01 bis 10 Gew.-%, bezogen auf die Gesamtmenge der wässrigen Kompositpartikel-Dispersion, beträgt.

6. Verfahren nach einem der Ansprüche 1 bis 5, **dadurch gekennzeichnet, dass** die wässrige Kompositpartikel-Dispersion nach einem Verfahren hergestellt wird, bei dem wenigstens ein ethylenisch ungesättigtes Monomer in wässrigem Medium dispers verteilt und mittels wenigstens eines radikalischen Polymerisationsinitiators im Beisein wenigstens eines dispers verteilten, feinteiligen anorganischen Feststoffs und wenigstens eines Dispergiermittels nach der Methode der radikalisch wässrigen Emulsionspolymerisation polymerisiert wird, wobei
a) eine stabile wässrige Dispersion des wenigstens einen anorganischen Feststoffs eingesetzt wird, welche dadurch charakterisiert ist, dass sie bei einer Anfangsfeststoffkonzentration von ≥ 1 Gew.-%, bezogen auf die wässrige Dispersion des wenigstens einen anorganischen Feststoffs, noch eine Stunde nach ihrer Herstellung mehr als 90 Gew.-% des ursprünglich dispergierten Feststoffes in dispergierter Form enthält und deren dispergierte Feststoffteilchen einen gewichtsmittleren Durchmesser ≤ 100 nm aufweisen,
b) die dispergierten Feststoffteilchen des wenigstens einen anorganischen Feststoffs in einer wässrigen Standardkaliumchlorid-Lösung bei einem pH-Wert, der dem pH-Wert des wässrigen Dispergiermediums vor Beginn der Zugabe der Dispergiermittel entspricht, eine von Null verschiedene elektrophoretische Mobilität zeigen,
c) die wässrige Feststoffteilchendispersion vor Beginn der Zugabe des wenigstens einen ethylenisch ungesättigten Monomeren mit wenigstens einem anionischen, kationischen und nichtionischen Dispergiermittel versetzt wird,
d) danach von der Gesamtmenge des wenigstens einen Monomeren 0,01 bis 30 Gew.-% der wässrigen Feststoffteilchendispersion zugesetzt und bis zu einem Umsatz von wenigstens 90 % polymerisiert werden
und
e) daran anschließend die Restmenge des wenigstens einen Monomeren unter Polymerisationsbedingungen nach Maßgabe des Verbrauchs kontinuierlich zugegeben wird.

7. Verfahren nach einem der Ansprüche 1 bis 5, **dadurch gekennzeichnet, dass** die wässrige Kompositpartikel-Dispersion nach einem Verfahren hergestellt wird, bei dem wenigstens ein ethylenisch ungesättigtes Monomer in wässrigem Medium dispers verteilt und mittels wenigstens eines radikalischen Polymerisationsinitiators im Beisein wenigstens eines dispers verteilten, feinteiligen anorganischen Feststoffes und wenigstens eines Dispergierhilfsmittels nach der Methode der radikalisch wässrigen Emulsionspolymerisation polymerisiert werden, wobei
a) 1 bis 1000 Gew.-% eines anorganischen Feststoffes mit einer mittleren Teilchengröße ≤ 100 nm und 0,05 bis 2 Gew.-% eines radikalischen Polymerisationsinitiators, bezogen auf die Gesamtmenge an ethylenisch ungesättigten Monomeren (Gesamtmonomerenmenge) eingesetzt werden,
b) wenigstens eine Teilmenge des anorganischen Feststoffs in einem wässrigen Polymerisationsmedium in Form einer wässrigen Feststoffdispersion vorgelegt wird, daran anschließend
c) der erhaltenen wässrigen Feststoffdispersion insgesamt ≥ 0,01 und ≤ 20 Gew.-% der Gesamtmonomerenmenge und ≥ 60 Gew.-% der Gesamtmenge an radikalischem Polymerisationsinitiator zudosiert und die zudosierten ethylenisch ungesättigten Monomeren unter Polymerisationsbedingungen bis zu einem Monomerenumsatz ≥ 80 Gew.-% polymerisiert werden, und daran anschließend dem erhaltenen Polymerisationsgemisch
d) die gegebenenfalls verbliebene Restmenge des anorganischen Feststoffs, die gegebenenfalls verbliebene Restmenge des radikalischen Polymerisationsinitiators und die verbliebene Restmenge der ethylenisch ungesättigten Monomeren unter Polymerisationsbedingungen zudosiert und bis zu einem Monomerenumsatz ≥ 90 Gew.-% polymerisiert werden.

8. Verfahren nach einem der Ansprüche 1 bis 7, **dadurch gekennzeichnet, dass** es sich bei dem feinteiligen anorganischen Feststoff um eine siliziumhaltige Verbindung handelt.

9. Verfahren nach Anspruch 8, **dadurch gekennzeichnet, dass** es sich bei dem feinteiligen anorganischen Feststoff um pyrogene und/oder kolloidale Kieselsäure, Siliziumdioxid-Sole und/oder Schichtsilikate handelt.

10. Verfahren nach einem der Ansprüche 1 bis 9, **dadurch gekennzeichnet, dass** es sich bei der Silanverbindung I um (3-Glycidyloxypropyl)trimethoxysilan und/oder (3-Glycidyloxypropyl)methyldiethoxysilan, handelt.

11. Wässrige Kompositpartikel-Dispersion erhältlich nach einem Verfahren gemäß einem der Ansprüche 1 bis 10.

12. Wässrige Formulierung enthaltend eine wässrige Kompositpartikel-Dispersion gemäß Anspruch 11.

13. Verwendung einer Silanverbindung I zur Verbesserung der Lagerstabilität einer wässrigen Kompositpartikel-Dispersion.

14. Verwendung einer Silanverbindung I zur Verbesserung der Lagerstabilität einer, eine wässrige Kompositpartikel-Dispersion enthaltenden wässrigen Formulierung.

15. Verfahren zur Verbesserung der Lagerstabilität einer wässrigen Formulierung, welche eine wässrige Kompositpartikel-Dispersion enthält, **dadurch gekennzeichnet, dass** dem wässrigen Formulierungsmedium vor, während oder nach der Zugabe der wässrigen Kompositpartikel-Dispersion eine Silanverbindung I zugesetzt wird.

## Claims

1. A process for improving the storage stability of an aqueous dispersion of particles composed of addition polymer and finely divided inorganic solid (composite particles), wherein, during or after the preparation of the composite particles dispersed in the aqueous medium (composite-particle dispersion), an organic silane compound I, of the general formula 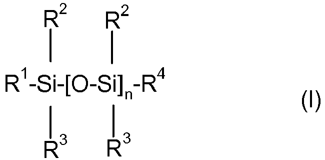 where
R¹ to R³ are
- C₁-C₁₀ alkoxy,
- unsubstituted or substituted C₁-C₃₀ alkyl,
- unsubstituted or substituted C₅-C₁₅ cycloalkyl,
- unsubstituted or substituted C₆-C₁₀ aryl,
- unsubstituted or substituted C₇-C₁₂ aralkyl,
R⁴ is 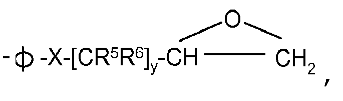
Φ is
- unsubstituted or substituted C₁-C₃₀ alkylene,
- unsubstituted or substituted C₅-C₁₅ cycloalkylene,
- unsubstituted or substituted C₆-C₁₀ arylene,
- unsubstituted or substituted C₇-C₁₂ aralkylene,
X is oxygen, NR⁷ or CR⁸R⁹,
R⁵ to R⁹ are hydrogen or C₁-C₄ alkyl,
n is an integer from 0 to 5,
y is an integer from 0 to 5, and
at least one of the radicals R¹ to R³ is C₁-C₁₀ alkoxy,
is added to the aqueous dispersion medium.

2. The process according to claim 1, wherein the silane compound I is added to the aqueous dispersion medium of the aqueous composite-particle dispersion after its preparation.

3. The process according to one of claims 1 and 2, wherein the aqueous composite-particle dispersion comprising a silane compound I has a pH ≥ 7 and ≤ 11.

4. The process according to one of claims 1 to 3, wherein, in the silane compound I, R¹ and R² are methoxy or ethoxy, R³ is methoxy, ethoxy, methyl or ethyl, Φ is ethylene, n-propylene or n-butylene, X is oxygen, R⁵ and R⁶ are hydrogen and y is the number 1.

5. The process according to one of claims 1 to 4, wherein the amount of the silane compound I is from 0.01 to 10% by weight, based on the total amount of the aqueous composite-particle dispersion.

6. The process according to one of claims 1 to 5, wherein the aqueous composite-particle dispersion is prepared by a process in which at least one ethylenically unsaturated monomer is dispersely distributed in aqueous medium and is polymerized by the method of free-radical aqueous emulsion polymerization by means of at least one free-radical polymerization initiator in the presence of at least one dispersely distributed, finely divided inorganic solid and at least one dispersant, where
a) a stable aqueous dispersion of said at least one inorganic solid is used, said dispersion having the characteristic features that at an initial solids concentration of ≥ 1% by weight, based on the aqueous dispersion of said at least one inorganic solid, it still comprises in dispersed form one hour after its preparation more than 90% by weight of the originally dispersed solid and its dispersed solid particles have a weight-average diameter ≤ 100 nm,
b) the dispersed particles of said at least one inorganic solid exhibit a nonzero electrophoretic mobility in an aqueous standard potassium chloride solution at a pH which corresponds to the pH of the aqueous dispersion medium before the beginning of dispersant addition,
c) at least one anionic, cationic and nonionic dispersant is added to the aqueous solid-particle dispersion before the beginning of the addition of said at least one ethylenically unsaturated monomer,
d) then from 0.01 to 30% by weight of the total amount of said at least one monomer are added to the aqueous solid-particle dispersion and polymerized to a conversion of at least 90%,
and
e) thereafter the remainder of said at least one monomer is added under polymerization conditions continuously at the rate at which it is consumed.

7. The process according to one of claims 1 to 5, wherein the aqueous composite-particle dispersion is prepared by a process in which at least one ethylenically unsaturated monomer is dispersely distributed in aqueous medium and is polymerized by the method of free-radical aqueous emulsion polymerization by means of at least one free-radical polymerization initiator in the presence of at least one dispersely distributed, finely divided inorganic solid and at least one dispersing assistant, where
a) 1% to 1000% by weight of an inorganic solid having an average particle size ≤ 100 nm and 0.05% to 2% by weight of a free-radical polymerization initiator are used, based on the total amount of ethylenically unsaturated monomers (total monomer amount),
b) at least one portion of the inorganic solid is introduced in an aqueous polymerization medium in the form of an aqueous dispersion of solid, after which
c) metered into the resulting aqueous dispersion of solid is a total of ≥ 0.01% any ≤ 20% by weight of the total monomer amount and ≥ 60% by weight of the total monomer amount of free-radical polymerization initiator, and the ethylenically unsaturated monomers metered in are polymerized under polymerization conditions to a monomer conversion ≥ 80% by weight, and subsequently
d) any remainder of the inorganic solid, any remainder of the free-radical polymerization initiator, and the remainder of the ethylenically unsaturated monomers are metered into the resulting polymerization mixture under polymerization conditions and are polymerized to a monomer conversion ≥ 90% by weight.

8. The process according to one of claims 1 to 7, wherein the finely divided inorganic solid is a silicon compound.

9. The process according to claim 8, wherein the finely divided inorganic solid is pyrogenic and/or colloidal silica, silicon dioxide sols and/or phyllosilicates.

10. The process according to one of claims 1 to 9, wherein the silane compound I is (3-glycidyloxypropyl)trimethoxysilane and/or (3-glycidyloxypropyl)methyldiethoxysilane.

11. An aqueous composite-particle dispersion obtainable by a process according to one of claims 1 to 10.

12. An aqueous formulation comprising an aqueous composite-particle dispersion according to claim 11.

13. The use of a silane compound I for improving the storage stability of an aqueous composite-particle dispersion.

14. The use of a silane compound I for improving the storage stability of an aqueous formulation comprising an aqueous composite particle dispersion.

15. A process for improving the storage stability of an aqueous formulation comprising an aqueous composite particle dispersion, wherein before, during or after the addition of the aqueous composite particle dispersion a silane compound I is added to the aqueous formulation medium.

## Revendications

1. Procédé d'amélioration de la stabilité au stockage d'une dispersion aqueuse de particules, qui sont constituées d'un polymère et d'un solide inorganique finement divisé (particules composites), **caractérisé en ce qu'**un composé de silane organique I, de formule générale 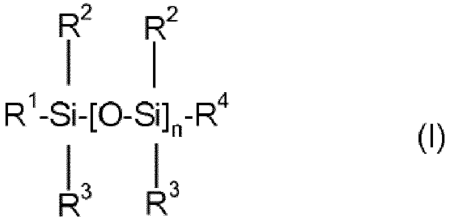 avec
R¹ à R³ :
- alcoxy en C₁-C₁₀,
- alkyle en C₁-C₃₀ non substitué ou substitué,
- cycloalkyle en C₅-C₁₅ non substitué ou substitué,
- aryle en C₆-C₁₀ non substitué ou substitué,
- aralkyle en C₇-C₁₂ non substitué ou substitué,
R⁴ : - 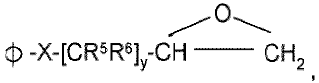
Φ :
- alkylène en C₁-C₃₀ non substitué ou substitué,
- cycloalkylène en C₅-C₁₅ non substitué ou substitué,
- arylène en C₆-C₁₀ non substitué ou substitué,
- aralkylène en C₇-C₁₂ non substitué ou substitué,
X : oxygène, NR⁷ ou CR⁸R⁹,
R⁵ à R⁹ : hydrogène, alkyle en C₁-C₄,
n : nombre entier de 0 à 5,
y : nombre entier de 0 à 5,
au moins un des radicaux R¹ à R³ représentant alcoxy en C₁-C₁₀,
est ajouté au milieu de dispersion aqueux pendant ou après la fabrication des particules composites dispersées dans le milieu aqueux (dispersion de particules composites).

2. Procédé selon la revendication 1, **caractérisé en ce que** le composé de silane I est ajouté au milieu de dispersion aqueux de la dispersion aqueuse de particules composites après sa fabrication.

3. Procédé selon l'une quelconque des revendications 1 et 2, **caractérisé en ce que** la dispersion aqueuse de particules composites contenant le composé de silane I présente un pH ≥ 7 et ≤ 11.

4. Procédé selon l'une quelconque des revendications 1 à 3, **caractérisé en ce que**, dans le composé de silane I, R¹ et R² représentent méthoxy ou éthoxy, R³ représente méthoxy, éthoxy, méthyle ou éthyle, Φ représente éthylène, n-propylène ou n-butylène, X représente oxygène, R⁵ et R⁶ représentent hydrogène, et y représente le nombre 1.

5. Procédé selon l'une quelconque des revendications 1 à 4, **caractérisé en ce que** la quantité du composé de silane I est de 0,01 à 10 % en poids, par rapport à la quantité totale de la dispersion aqueuse de particules composites.

6. Procédé selon l'une quelconque des revendications 1 à 5, **caractérisé en ce que** la dispersion aqueuse de particules composites est fabriquée par un procédé selon lequel au moins un monomère éthyléniquement insaturé est dispersé dans un milieu aqueux et polymérisé au moyen d'au moins un initiateur de polymérisation radicalaire en présence d'au moins un solide inorganique finement divisé dispersé et d'au moins un dispersant par la méthode de polymérisation en émulsion aqueuse radicalaire,
a) une dispersion aqueuse stable dudit au moins un solide inorganique étant utilisée, qui est **caractérisée en ce qu'**à une concentration en solides initiale ≥ 1 % en poids, par rapport à la dispersion aqueuse dudit au moins un solide inorganique, elle contient encore une heure après sa fabrication plus de 90 % en poids du solide dispersé initialement sous forme dispersée, et dont les particules solides dispersées présentent un diamètre moyen en poids ≤ 100 nm,
b) les particules solides dispersées dudit au moins un solide inorganique présentant dans une solution aqueuse de chlorure de potassium standard, à un pH qui correspond au pH du milieu de dispersion aqueux avant le début de l'ajout du dispersant, une mobilité électrophorétique différente de zéro,
c) la dispersion aqueuse de particules solides étant mélangée avant le début de l'ajout dudit au moins un monomère éthyléniquement insaturé avec au moins un dispersant anionique, cationique et non ionique,
d) puis 0,01 à 30 % en poids de la quantité totale dudit au moins un monomère étant ajouté à la dispersion aqueuse de particules solides et polymérisé jusqu'à une conversion d'au moins 90 %, puis
e) la quantité résiduelle dudit au moins un monomère étant ajoutée en continu dans des conditions de polymérisation à mesure de l'utilisation.

7. Procédé selon l'une quelconque des revendications 1 à 5, **caractérisé en ce que** la dispersion aqueuse de particules composites est fabriquée par un procédé selon lequel au moins un monomère éthyléniquement insaturé est dispersé dans un milieu aqueux et polymérisé au moyen d'au moins un initiateur de polymérisation radicalaire en présence d'au moins un solide inorganique finement divisé dispersé et d'au moins un adjuvant de dispersion par la méthode de polymérisation en émulsion aqueuse radicalaire,
a) 1 à 1 000 % en poids d'un solide inorganique ayant une taille de particule moyenne ≤ 100 nm et 0,05 à 2 % en poids d'un initiateur de polymérisation radicalaire étant utilisés, par rapport à la quantité totale de monomères éthyléniquement insaturés (quantité totale de monomères),
b) au moins une partie du solide inorganique étant chargée initialement dans un milieu de polymérisation aqueux sous la forme d'une dispersion aqueuse de solides, puis
c) au total ≥ 0,01 et ≤ 20 % en poids de la quantité totale de monomères et ≥ 60 % en poids de la quantité totale d'initiateur de polymérisation radicalaire étant ajoutés à la dispersion aqueuse de solides obtenue, et les monomères éthyléniquement insaturés ajoutés étant polymérisés dans des conditions de polymérisation jusqu'à une conversion des monomères ≥ 80 % en poids, puis
d) la quantité résiduelle éventuellement restante du solide inorganique, la quantité résiduelle éventuellement restante de l'initiateur de polymérisation radicalaire et la quantité résiduelle restante des monomères éthyléniquement insaturés étant ajoutées au mélange de polymérisation obtenu dans des conditions de polymérisation, et polymérisées jusqu'à une conversion des monomères ≥ 90 % en poids.

8. Procédé selon l'une quelconque des revendications 1 à 7, **caractérisé en ce que** le solide inorganique finement divisé est un composé contenant du silicium.

9. Procédé selon la revendication 8, **caractérisé en ce que** le solide inorganique finement divisé est une silice pyrogénée et/ou colloïdale, des sols de dioxyde de silicium et/ou des phyllosilicates.

10. Procédé selon l'une quelconque des revendications 1 à 9, **caractérisé en ce que** le composé de silane I est le (3-glycidyloxypropyl)triméthoxysilane et/ou le (3-glycidyloxypropyl)méthyldiéthoxysilane.

11. Dispersion aqueuse de particules composites pouvant être obtenue par un procédé selon l'une quelconque des revendications 1 à 10.

12. Formulation aqueuse contenant une dispersion aqueuse de particules composites selon la revendication 11.

13. Utilisation d'un composé de silane I pour améliorer la stabilité au stockage d'une dispersion aqueuse de particules composites.

14. Utilisation d'un composé de silane I pour améliorer la stabilité au stockage d'une formulation aqueuse contenant une dispersion aqueuse de particules composites.

15. Procédé d'amélioration de la stabilité au stockage d'une formulation aqueuse, qui contient une dispersion aqueuse de particules composites, **caractérisé en ce qu'**un composé de silane I est ajouté au milieu aqueux de la formulation avant, pendant ou après l'ajout de la dispersion aqueuse de particules composites.
